# EUROPÄISCHE PATENTANMELDUNG

(11) **EP 3 210 748 A1**
(43) Veröffentlichungstag der Anmeldung: **30.08.2017**
(21) Anmeldenummer: 16002413.9
(22) Anmeldetag: 14.11.2016
(51) Int. Cl.: B29C 47/08, B29C 47/92, B29C 47/40

(54) **EXTRUDER, KUNSTSTOFFFORMGEBENDE ANLAGE ODER COMPOUNDIERANLAGE SOWIE VERFAHREN ZUM BETREIBEN EINER SOLCHEN ANLAGE**

(30) Priorität: 29.02.2016 DE 102016002967
(71) Anmelder: Reifenhäuser GmbH & Co. KG Maschinenfabrik, 53844 Troisdorf (DE)
(72) Erfinder: Siebigteroth, Peter, 53783 Eitorf (DE); Michels, Patrick, 53111 Bonn (DE); Pohl, Tim Carsten, 50937 Köln (DE); Hermes, Raphael, 53225 Bonn (DE); Jacobi, Jan, 53819 Neunkirchen-Seelscheid (DE)
(74) Vertreter: Farago, Peter Andreas

(57) **Zusammenfassung**

Die Erfindung betrifft einen Extruder (1), eine kunststoffformgebende Anlage und ein Verfahren zum Betreiben einer solchen Anlage. Insbesondere betrifft die Erfindung einen Doppelschneckenextruder (2), also einen Extruder mit einem Doppelzylinder und einer darin angeordneten Doppelschnecke (2) sowie insbesondere eine Anlage zum Herstellen einer Folie und ein Verfahren zum Betreiben einer solchen Anlage zum Herstellen einer Folie.Dem Stand der Technik sind verschiedene Ansätze zur Überwachung eines Verschleisses des Extruders bekannt. Zahlreiche Messverfahren und Messwerte wurden diskutiert.Die Erfindung hat entdeckt, dass sich der Verschleiss in bisher nicht gekannter Qualität über eine Biegemomentenberechnung und über eine Frequenzberechnung, vor allem des Biegemoments, prüfen und sogar prognostizieren lässt.

## Beschreibung

Die Erfindung betrifft einen Extruder, eine kunststoffformgebende Anlage oder eine Compoundieranlage sowie ein Verfahren zum Betreiben einer solchen Anlage.

Insbesondere betrifft die Erfindung einen Doppelschneckenextruder, also einen Extruder mit einem Zylinder, konkret mit einem Doppelzylinder, und mit einer darin angeordneten Doppelschnecke, sowie insbesondere eine Anlage zum Herstellen einer Folie, vor allem eine Blasfolienanlage oder eine Flachfolienanlage, und ein Verfahren zum Betrieben einer solchen Anlage zum Herstellen einer Folie.

Die EP 1 507 182 A1 offenbart ein Verfahren zur Verschleißerkennung bei Extrudermaschinen. Es wird hierzu ein Referenzpunkt festgesetzt, und zwar aus einer Liste von relevanten Maschinendaten, nämlich Förderverhalten, Förderrate, Massedurchsatz, Extruderdrehzahl, Extruderdrehmoment, Massedruck und Zylindertemperaturprofil. Während des Betriebs der Extrudermaschine werden die aktuellen Messwertdaten mit dem Referenzpunkt verglichen. Wenn eine vorbestimmte Abweichung ermittelt wird, hat die Druckschrift einen übermäßigen Verschleiß erkannt.

Die DE 10 2007 021 037 B4 offenbart ebenfalls ein Verfahren zur Verschleißerkennung bei Extrudermaschinen. In Verbesserung des vorstehend beschriebenen Verfahrens der selben Anmelderin wird ein Verfahren vorgestellt, bei dem eine automatische Erkennung und eine frühzeitige, stetige Meldung des Verschleißzustands von Schnecke und Zylinder ermöglicht wird. Dazu werden als Parameter Einschaltdauer und das Tastverhältnis von Heiz- und Kühlleistung genannt.

Die DE 10 2011 103 810 A1 offenbart eine Plastifiziereinheit mit einem Verschleißmesssensor. Der Sensor misst fortlaufend die Distanz zwischen der Schnecke und dem Zylinder und schließt darauf auf den Verschleiß.

Weitere Systeme an Extrudern sind bekannt aus der FR 2.148.970, der US 4,604,251, der US 2002/0083761 A1, der DE 44 45 352 C1 der hiesigen Anmelderin oder der DE 100 48 826 A1, wobei die letztgenannte Druckschrift lediglich ein Sensorsystem für gattungsfremde Anwendungen vorschlägt.

Der Erfindung liegt die Aufgabe zugrunde, dem Stand der Technik eine Verbesserung oder eine Alternative zur Verfügung zu stellen.

Nach einem ersten Aspekt der vorliegenden Erfindung löst diese Aufgabe ein Extruder mit einem Zylinder und einer darin angeordneten Schnecke, insbesondere mit einem Doppelzylinder und einer darin angeordneten Doppelschnecke, sowie mit einem Antriebsstrang für die Schnecke, wobei der Antriebsstrang zur Schnecke eine Kupplung aufweist und wobei der Extruder, vor allem die Kupplung, einen Sensor zur Erfassung einer Momentenbelastung aus Dreh- und/oder Biegemoment und zur Erzeugung elektronischer Daten aus der erfassten Momentenbelastung aufweist, wobei ein Controller vorgesehen ist, der in Wirkverbindung zu einem Antrieb für den Antriebsstrang steht, wobei der Sensor in Datenverbindung zum Controller steht, wobei der Controller dazu eingerichtet ist, die Daten zur erfassten Momentenbelastung auszuwerten und bei Überschreiten eines im Controller eingestellten Grenzwerts eine Schutzaktion auszulösen, wobei das Auswerten eine Biegemomentberechnung beinhaltet.

Begrifflich sei hierzu Folgendes erläutert:
Die Prototypenversuche der Erfinder haben an Doppelschneckenextrudern stattgefunden. Für diese haben die Messwerte eine Korrelation zum Verschleiß ergeben. Aufgrund der von den Erfindern vermuteten zugrundeliegenden physikalischen Mechanismen ist davon auszugehen, dass die hier vorgestellte Erfindung auch bei anderen Mehrschneckenextrudern anwendbar sein sollten.

Generell sei angemerkt, dass im Rahmen der hier vorliegenden Patentanmeldung unbestimmte Artikel und Zahlenangaben wie "ein", "zwei" usw. im allgemeinen als "mindestens" Angaben zu verstehen sein sollen, also als "mindestens ein ...", "mindestens zwei ..." usw., sofern sich nicht etwa aus dem jeweiligen Kontext implizit für den Fachmann ergibt oder es ausdrücklich beschrieben wird, dass nur "genau ein ...", "genau zwei ..." usw. gemeint sein soll.

Der Fachmann weiß die Merkmale bei einer anderen Anzahl analog anzupassen. So weiß der Fachmann, dass ein Einschneckenextruder eine echte Zylindermantelfläche hat, dass aber bei einem Doppelschneckenextruder keine zwei vollständigen Zylinder mehr vorliegen, sondern zwei miteinander verbundene Teilzylindermäntel.

Der "Antriebsstrang" sei ein motorisch, insbesondere elektromotorisch angetriebener Teil der Extrudermaschine. Insbesondere kann es sich um eine Welle oder eine Mehrzahl an Wellen mit einem Getriebe handeln.

Der Motor selbst muss nicht zwingend Teil des Antriebsstrangs sein, kann aber dazugehören.

Eine "Kupplung" im Antriebsstrang zwischen Getriebe und Motor ist vorgesehen, um einen den Extruder durch Momentan-Überlastung zugefügten Schaden zu vermeiden. So kann beispielsweise eine Sicherheitsrutschkupplung vorgesehen sein, wobei diese im Idealfall in ihrer Sensibilität eingestellt werden kann, also dass das Rutschen auslösende Moment quantitativ verändert werden kann. Bei einem zu großen Drehwiderstand an der Schnecke, beispielsweise durch zu kalt gewordene Schmelze, kann die Sicherheitsrutschkupplung ins Rutschen geraten und dadurch eine Drehmoment-Überlastung für den Antriebsstrang und beispielsweise für die Schnecken oder das dortige Getriebe verhindern. Selbstverständlich sind auch nicht ohne weiteres reversible Kupplungen denkbar, so beispielsweise mit einem Scherstift verbundene Wellen oder andere zerstörungsbehaftete Sicherheitsentkopplungen, welche einen manuellen Eingriff zum Wiederinstandsetzen des Betriebsmodus' erfordern.

Der "Sensor" kann ein handelsüblicher Sensor verschiedenster Art sein. Im Regelfall werden die Messergebnisse besser, wenn ein besserer Sensor eingesetzt wird. Auch mit extrem kostengünstigen Sensoren wie beispielsweise Dehnmessstreifen kann jedoch die Erfindung bereits verwirklicht werden, weil es letztlich im Wesentlichen darauf ankommt, die richtige mechanische Kenngröße zu identifizieren und für den Betrieb des Extruders insbesondere dessen Verschleißmessung und -prognose auszuwerten.

Der Sensor kann gemäß den Prototypenversuchen der Erfinder an verschiedensten Stellen am Extruder angebracht sein, vor allem aber an den Kupplungen zwischen Schnecken und Getriebe oder direkt auf den Schnecken oder direkt auf den Getriebeschäften.

Der Sensor soll geeignet sein zur Erfassung einer Momentenbelastung an der Schnecke oder an der zur Schnecke führenden Kupplung oder am Antriebsstrang, gegebenenfalls auch an weiteren Stellen der Extrudermaschine.

Insbesondere soll der Sensor geeignet sein zur Erfassung eines Biegemoments.

Ein Sensor zur Erfassung eines Biegemoments wird im Regelfall nicht das Biegemoment als solches ermitteln, sondern vielmehr eine mechanische Längung oder Verkürzung eines Bauteils entlang der Drehachse oder parallel zur Drehachse ermitteln. Der Sensor selbst kann dazu eingerichtet sein, elektronische Daten zu seinen Messwerten zu erzeugen und weiterzugeben, oder es kann ein einfacher Sensor sein, bei dem aber bevorzugt elektrisch Daten abgegriffen werden und dann aus den abgegriffenen Daten elektronische Daten erzeugt werden. So ist es beispielsweise bewährt, bei einem Dehnmessstreifen den elektrischen Widerstand zu ermitteln und daraus elektronische Daten zu berechnen.

Es sei darauf hingewiesen, dass auch andere Messmethoden Verwendung finden können. Der genannte Sensor kann auch künftige Messmethoden einsetzen.

Der "Controller" wird im Regelfall über eine central processing unit (CPU) verfügen, um eigenständig Rechenschritte durchführen zu können und auch ein Computerprogramm ausführen zu können. Bevorzugt weist der Controller dazu einen Speicher auf, in welchem ein Computerprogramm gespeichert sein kann.

Der Controller kann Bestandteil interner Hardware oder einer Softwarelösung sein. Die Softwarelösung ist dabei ortsungebunden.

Hiervon unabhängig verfügt der Controller bevorzugt über einen Speicher, den er selbst mit Daten füllen kann und/oder aus welchem er Daten auslesen kann.

Ein Signalausgang am Controller, beispielsweise ein geschalteter Stromausgang, kabellos oder kabelbehaftet, soll in "Wirkverbindung" zum Antrieb für den Antriebsstrang stehen. Diese Verbindung kann mittelbar oder unmittelbar sein. Beispielsweise ist denkbar, dass der Controller direkt den Antrieb steuert oder regelt; alternativ oder kumulativ kann vorgesehen sein, dass der Controller auf eine oder mehrere Kupplungen am Extruder einwirken kann, sei es zum Öffnen und Schließen der Kupplung oder sei es beispielsweise zum Einstellen einer Sensibilität einer Kupplung.

Auch eine Verbindung zu einer rein elektronischen Wirkung wie beispielsweise zu einem Anzeigedisplay sei in diesem Zusammenhang als eine Wirkverbindung zu einem Antrieb für den Antriebsstrang zu verstehen.

Der Sensor soll in Datenverbindung zum Controller stehen. Mit anderen Worten bedeutet dies, dass der Controller in der Lage sein muss, die Daten vom Sensor zu erfassen, damit der Controller die Daten weiter verarbeiten kann.

Mit Blick auf die Betriebssicherheit werden kabelbehaftete Übertragungsmittel für die Datenverbindung bevorzugt. Auch kabellose Verbindungsmittel sind denkbar, wie beispielsweise ein Funknetz oder eine optische Datenübertragung.

Die "Schutzaktion", die vom Controller ausgelöst werden soll, kann mechanischer oder nicht-mechanischer Natur sein. Beispielsweise kann der Controller direkt in die Momentenbelastung am Extruder eingreifen und beispielsweise den Antrieb herunterfahren, ausschalten oder langsamer fahren lassen; und/oder der Controller kann auf eine Kupplung einwirken können, beispielsweise die Kupplung öffnen oder in ihrer Sensibilität verstellen können; und/oder die Schutzaktion kann darin bestehen, eine Nachricht zu vermitteln, beispielsweise an einem Display an der Anlage, über ein Warnlicht und/oder ein akustisches Signal an der Anlage und/oder über eine Datenverbindung zu einer anderen Stelle, beispielsweise zu einer Betriebsleitung oder auch über das Internet oder ein anderes Datennetz zum Hersteller, Verkäufer oder Serviceunternehmen des Extruders.

Der erste Aspekt der Erfindung lässt den Controller die elektronischen Daten auswerten. Dazu soll eine "Biegemomentberechnung" durchgeführt werden, zumindest unter anderem eine Biegemomentberechnung.

Eine Biegemomentberechnung kann vor allem eine Biegemomentenberechnung beinhalten, also das Errechnen eines Biegemoments als letztendlicher Wert der Rechnung; oder es kann eine weitere Rechnung angestellt werden, bei der nur ein Biegemoment im Rahmen der Rechnung als ein Zwischenwert verwendet wird.

Auch ein Wert, der sich mittelbar auf das Biegemoment umrechnen lässt, kann herangezogen werden, beispielsweise eine axiale Längung oder achsparallele Längung, oder eine Längung, die zumindest eine Komponente achsparallel zur Extrudermaschine hat, weil diese über eine Winkelfunktion auf die axiale Längung umgerechnet werden kann, somit ihrerseits wieder auf eine Biegemomentbelastung umgerechnet werden kann.

Versuche und Datenauswertungsreihen der Erfinder haben ergeben, dass tatsächlich zwischen dem Biegemoment und dem Verschleiß von Schnecke und/oder Zylinder am Extruder eine Korrelation besteht. Nach Einschätzung der Erfinder ist die Berechnungsweise über das Biegemoment bahnbrechend, weil sich sämtliche bisher im Stand der Technik verwendeten Messwerte bei den Prototypenversuchen der hier vorliegenden Erfinder als untauglich zur Vorhersage des Verschleißes herausgestellt haben.

Auch andere Messgrößen sind grundsätzlich für die Bewertung des Verschleißzustands der Schnecke geeignet. Diese werden jedoch vom aktuellen Betriebszustand des Extruders beeinflusst, sodass eine betriebspunktabhängige Kompensation des Messsignals notwendig wäre, um den auf Verschleiß zurückzuführenden Signalanteil zu ermitteln.

In einer bevorzugten Ausführungsform der Erfindung ist der Extruder so eingerichtet, dass der Controller ein gemitteltes Offset des Biegemoments errechnet.

Die Schnecke in einem Extruder dreht sich während des Betriebs. Die Biegemomentbelastung einer Stelle am momentenübertragenden Strang, beispielsweise an der Schnecke oder ihrer Kupplung, wobei die Kupplung hierzu auch eine reine Messkupplung sein kann, unterliegt daher einem zyklischen Verhalten. Insbesondere kann das Biegemoment an einer Oberfläche des rotierenden Bauteils ermittelt werden, beispielsweise als lokale Längung, in der Mechanik gern als Dehnung ε (epsilon) bezeichnet, beispielsweise mit einem Dehnmessstreifen.

Werden die zyklischen Messwerte zum Biegemoment über der Zeit aufgetragen, so ergibt sich eine periodische Kurve, welche um einen Mittelwert herum schwankt. Dieser sei hier vorliegend als "Offset" bezeichnet.

Die Prototypenversuche haben ergeben, dass dieses Offset mit zunehmendem Verschleiß im Extruder eine deutliche Änderung erfährt. So hat es sich bei einem Versuch für eine der beiden Schnecken in einem Doppelschneckenextruder von etwa minus 200 Nm auf etwa minus 100 Nm geändert.

Auch die Amplitude der Schwingungen um das Offset herum hat sich geändert. Beim Vergleich zwischen dem nicht-verschlissenen und dem verschlissenen Zustand. Die stärkere charakteristische Änderung haben die Erfinder allerdings im Offset identifiziert.

Die Torsionsdrehmomente sind interessanterweise zumindest in etwa gleich geblieben. Die Veränderung der relevanten Kennwerte ist abhängig vom verarbeiteten Rohstoff.

Es versteht sich, dass es nicht zwingend der Mittelwert sein muss, der gemessen oder errechnet und anschließend verglichen wird. Wesentlich ist nur, dass hinsichtlich der periodischen Kurve ein charakteristischer Wert verwendet wird. Es kann beispielsweise auch das jeweils lokale Maximum oder das lokale Minimum eines jeden Zyklus' oder ein anderer Wert wie beispielsweise der Median-Wert verwendet werden.

Mit anderen Worten ist entscheidend, dass gemäß dieser vorteilhaften Beobachtung der Erfinder sich die periodische Kurve der Biegemomente zwar auch in der Amplitude, insbesondere aber im Offset oder generell in der Lage, ändert, während der Extruder verschleißt.

Es wurde bereits daraufhingewiesen, dass es auch vorteilhaft sein kann, eine Amplitude des Biegemoments zu errechnen, also die Amplitude des Kurvenverlaufs, der sich im Biegemoment einstellt.

Nach einem zweiten Aspekt der vorliegenden Erfindung löst die gestellte Aufgabe ein Extruder mit einem Zylinder und einer darin angeordneten Schnecke, insbesondere mit einem Doppelzylinder und einer darin angeordneten Doppelschnecke, sowie mit einem Antriebsstrang für die Schnecke, wobei der Antriebsstrang zur Schnecke eine Kupplung aufweist und wobei der Extruder, vor allem die Kupplung, einen Sensor zur Erfassung einer Momentenbelastung aus Dreh- und/oder Biegemoment und zur Erzeugung elektronischer Daten aus der erfassten Momentenbelastung aufweist, wobei ein Controller vorgesehen ist, der in Wirkverbindung zu einem Antrieb für den Antriebsstrang steht, wobei der Sensor in Datenverbindung zum Controller steht, wobei der Controller dazu eingerichtet ist, die Daten zur erfassten Momentenbelastung auszuwerten und bei Überschreiten eines im Controller eingestellten Grenzwerts eine Schutzaktion auszulösen, wobei das Auswerten eine Frequenzberechnung beinhaltet, insbesondere eine Biegemomentfrequenzberechnung.

Die Prototypenversuche der Erfinder haben ergeben, dass auch eine Frequenzberechnung wertvolle Daten über den Verschleiß geben kann. Insbesondere sei an die Frequenz des Biegemoments gedacht. Großer Nutzen kann aus dem ermittelten Frequenzspektrum gezogen werden.

Auch in Verbindung mit der Frequenzberechnung kann es sinnvoll sein, die Amplitude der Kurve ebenfalls zu werten.

Vor allem ist denkbar, dass mehrere Amplitudenerrechnungen zu verschiedenen Frequenzen durchgeführt werden, beispielsweise zu einer Grundfrequenz und zu den harmonischen Vielfachen der Grundfrequenz, respektive zu mehreren Grundfrequenzen und zu ihren harmonischen Vielfachen.

Generell sei daraufhingewiesen, dass wann immer hier von "Frequenz" die Rede ist auch ein "Frequenzspektrum" mit offenbart sein soll.

Der "im Controller eingestellte Grenzwert" kann beispielsweise ein fest vorgegebener Wert sein, den der Extruderhersteller fest einprogrammiert. Es kann aber auch ein variabler Wert sein, der entweder über ein Datennetzwerk über einen Servicetechniker seitens des Extruderherstellers geändert werden kann; oder der Wert kann vom Maschinenbenutzer eingestellt werden, beispielsweise um sich in der faktischen Produktion der theoretischen Kapazität soweit wie möglich anzunähern, oder beispielsweise um einen größeren Sicherheitsabstand zu wahren, um den Verschleiß des Extruders möglichst weit zu minimieren.

Wenn der Grenzwert, beispielsweise zu einem Biegemoment und/oder zu einem Torsionsmoment erreicht oder überschritten wird, soll die Schutzaktion ausgelöst werden. Die Schutzaktion kann vor allem ein Abbremsen oder Anhalten des Antriebsstrangs sein. Bei dieser Variante würde also auf den Antrieb eingewirkt. Eine andere Möglichkeit ist ein Öffnen der Kupplung, sei es maschinell reversibel oder sei es maschinell irreversibel, sodass ein manueller Eingriff erforderlich ist, den Extruder wieder in Gang zu setzen.

Hinsichtlich des Aufbaus des Extruders ist bevorzugt, wenn der Extruder zwischen dem Antriebsstrang und der Schnecke eine erste Kupplung und eine zweite Kupplung aufweist, insbesondere eine Sicherheitsrutschkupplung und eine Messkupplung, wobei bevorzugt die zwei Kupplungen beidseits eines Getriebes angeordnet sind, insbesondere die Sicherheitsrutschkupplung antriebsstrangseitig des Getriebes und die Messkupplung schneckenseitig des Getriebes.

Sicherheitsrutschkupplungen haben sich zum Schutz eines Extruders vor übermäßiger Momentenbelastung bereits bewährt. Diese befinden sich regelmäßig auf der Antriebsseite des Getriebes.

Wenn zusätzlich eine Kupplung vorgesehen ist, die für die Messung verwendet wird, dann lassen sich in hohem Maße vergleichbare und reproduzierbare Messergebnisse erzielen. Insbesondere fallen die im Getriebe anfallenden Frequenzen nicht mehr so stark in die Messungen hinein. Die Kupplung auf dem Weg vom Getriebe zur Schnecke nimmt im Wesentlichen die reinen Momentenbelastungen aus der Schnecke auf.

Auch beim Austausch einer Schnecke muss das Getriebe nicht geöffnet werden. Die Messstellen an oder in der Kupplung zwischen dem Getriebe und der Schnecke können so gestaltet sein, dass diese beim Austausch der Schnecke nicht beschädigt werden müssen.

Basierend auf der Idee der Biegemoentenauswertung muss die Messkupplung immer zwischen Schnecke und Abtriebswelle des Getriebes möglichst nahe des Schneckenschafts angebracht sein.

Die Schutzaktion kann auch frei von Mechanik die Ausgabe einer Verschleißwarnung sein.

Eine solche Verschleißwarnung kann beispielsweise lokal am Extruder erfolgen, beispielsweise über ein optisches oder akustisches Signal. Auch ein Bedien-Display kann zur Ausgabe der Verschleißwarnung verwendet werden.

Bevorzugt fordert der Controller eine Quittierung der Verschleißwarnung an, kann aber bei geeigneter Gestaltung dennoch die Produktion aufrechterhalten.

Vor allem kann eine Autorisierung erforderlich sein, um die Verschleißwarnung zu quittieren. Dies kann beispielsweise dadurch umgesetzt werden, dass nur ein eingeschränkter Personenkreis aus technisch leitenden Personen im Werk die Autorisierung hat, die Verschleißwarnung zu quittieren. Eine Autorisierung kann über verschiedenste im Stand der Technik bekannte Weisen erfolgen.

Alternativ oder zusätzlich zu einer lokalen Verschleißwarnung am Extruder kann über ein Datennetzwerk die Verschleißwarnung übertragen werden, bevorzugt an eine Betriebsleitung und/oder an den Extruderhersteller.

Es wird vorgeschlagen, dass mehrere unterschiedliche Grenzwerte vorgesehen sind, denen der Controller unterschiedliche Schutzaktion zuzuordnen eingerichtet ist.

Die "unterschiedlichen" Grenzwerte können sich darauf beziehen, dass hinsichtlich desselben Werts, beispielsweise des Drehmoments oder des Biegemoments, mehrere unterschiedliche Beträge für verschiedene Stufen der Schutzaktion-Eskalation vorgesehen sind, und/oder es können unterschiedliche Parameter ausgewertet werden, beispielsweise eine frühe erste Warnung, berechnet über das Biegemoment, zum drohenden Verschleiß, und zusätzlich eine akute Warnung, die den Extruder bei Erreichen des Grenzwerts sofort abschaltet, bezogen auf das aktuelle Torsionsmoment der Schnecke.

Bei den Prototypenversuchen der Erfinder haben sich Dehnmessstreifen für den Sensor sehr bewährt.

Dehnmessstreifen sind im Markt in vielfältiger Weise erhältlich. Sie sind immer verfügbar und kostengünstig einkaufbar. Zusätzlich arbeiten sie hochpräzise. Über eine Widerstandsänderung kann auf eine Längenänderung des unter dem aufgeklebten Dehnmessstreifen befindlichen Streckenbereichs, hier beispielsweise der Schnecke und/oder der Kupplung, präzise geschlossen werden.

Zudem nehmen Dehnmessstreifen nur sehr wenig Platz in Anspruch, sodass sie auch innerhalb des zum Zylinder führenden Flansches, beispielsweise an einer dort angebrachten Kupplung, leicht angebracht werden können.

Wegen der geringen Kosten eines Dehnmessstreifens lassen sich Dehnmessstreifen auch leicht redundant anordnen, beispielsweise zwei Dehnmessstreifen für denselben Wert, oder aber eine größere Anzahl Dehnmessstreifen für denselben Wert.

Es kann auch vorgesehen sein, dass der Sensor eine Optik aufweist, insbesondere einen Laser und eine Lichtstrahlerfassung.

Über einen Laser kann eine besonders präzise und berührungslose Messung beispielsweise von Biegungen der Schnecke vorgenommen werden.

Wenn ein magnetischer oder ein induktiver Sensor vorgesehen ist, dann kann leicht Zusatzinformation über die Schnecke gewonnen werden. Insbesondere können Unwuchten der Schnecke in der Drehung gut erkannt werden.

Es wird vorgeschlagen, dass der Controller in Datenverbindung zu einer extern aktualisierbaren Datenbank steht.

Die Datenbank kann entweder lokal am Extruder exklusiv dem Controller zugeordnet sein, oder es kann eine Datenbank sein, die von mehreren Extrudern angesteuert wird, die aber sämtlich lokal stehen, beispielsweise in einem Werk; es kann aber auch eine firmenweite Datenbank sein oder eine rechtlich anders strukturierte Datenbank, wobei diese auch im Datennetz zugänglich sein kann, beispielsweise über das Internet.

So ist denkbar, dass ein Hersteller von Extrudern regelmäßig die aktuell verfügbaren Extruder und Schnecken, oder auch die vielleicht nicht mehr erhältlichen, früheren Extruder und Schnecken in der Datenbank vorhält, wobei sich die Maschinen jeweils die für sie gedachten Daten abrufen können. Dies kann über einen Abruf erfolgen, oder es kann ein Push-Signal von der Datenbank zur Maschine erfolgen.

Wenn sich über die Benutzungsdauer von bestimmten Extrudermodellen genauere oder auch geänderte Erkenntnisse über den Verschleiß ergeben, dann können diese vom Benutzer, insbesondere vom Extruderhersteller, ständig aktualisiert werden.

Die Prognose für den Verschleiß sollte auch auf zumindest einen Parameter des zu verarbeitenden Materials zurückgreifen können.

Eine bevorzuge Ausführungsform der Erfindung sieht vor, dass der Controller eine Eingabeschnittstelle aufweist, um manuell eingegebene geometrische Mess- und/oder optische Werte zur Schnecke und/oder zum Zylinder aufzunehmen.

So ist beispielsweise daran zu denken, dass auch bei einer fortschreitenden elektronischen Überwachung die Extruder regelmäßig physisch gewartet werden sollten. Hierzu wird die Schnecke wird entnommen. Die Schnecke und der Zylinder können beispielsweise gereinigt oder vermessen werden.

Über die tatsächlichen Messwerte von Zylinder und/oder Schnecke können die Prognosewerte zum Verschleiß abgeglichen werden. Dies führt beispielsweise zu einer qualitativ verbesserten Vorhersage für die jeweils an einer Maschine vorherrschenden Produktionsbedingungen wie Umgebungstemperatur, Qualität der Luft, Qualität der Kohlenstoffgranulate oder der Zuschläge, Präzision in der Bedienung usw.

Um Bedienfehler möglichst weit ausschließen zu können, ist es von Vorteil, wenn der Extruder dazu eingerichtet ist, Messwerte zu erfassen. So kann beispielsweise eine Kamera- oder Messeinheit am Extruder vorgesehen sein, mit welcher der Zylinder und die Schnecke automatisch optisch oder anderweitig messtechnisch erfasst werden oder vom Wartungspersonal fotografiert werden können. Der Controller kann aus den aufgenommenen Daten unmittelbar die konkreten Verschleißwerte ermitteln, so z. B. die Abnutzung der Schnecke im Durchmesser. Auch mit ungeübtem Personal kann dadurch eine objektiv ideale Angleichung der Prognosewerte auf den lokalen Verschleiß erfolgen.

Der Controller weist bevorzugt einen Abgleichalgorithmus auf, um den Grenzwert oder die verschiedenen Grenzwerte oder Parameter zu berechnen, oder den oder die verschiedenen Grenzwerte anhand der manuell eingegebenen Werte, oder der optisch oder anderweitig automatisch erfassten Werte anzupassen.

Es versteht sich, dass sich die Vorteile des vorstehend genannten Extruders unmittelbar auch auf eine kunststoffformgebende Anlage erstrecken, insbesondere eine Anlage zum Herstellen einer Folie, vor allem eine Blasfolienanlage oder eine Flachfolienanlage, oder zum Herstellen eines Vlieses oder eines Monofilaments, wenn ein Extruder wie vorstehend beschrieben eingesetzt wird, sowie eine Düseneinheit und bevorzugt ebenfalls eine Wickeleinheit; als auch bei dem Einsatz in einer Direktextrusions- oder Compoundieranlage.

Eine solche Anlage kann auch mehrere Extruder aufweisen. Es ist nicht notwendig, dass sämtliche Extruder wie vorstehend beschrieben ausgebildet sind. Je mehr Extruder wie vorstehend ausgebildet sind, desto besser wird es jedoch für die Anlage sein.

Nach einem dritten Aspekt der vorliegenden Erfindung durch die gestellte Aufgabe ein Verfahren zum Betreiben einer Anlage wie vorstehend beschrieben mit einem Extruder wie eingangs beschrieben, wobei das Verfahren die folgenden Schritte aufweist:
(a) Erfassen eines Dreh- und/oder Biegemoments im Extruder über einen Sensor;
(b) Übertragen von Daten zur erfassten Momentenbelastung an den Controller;
(c) Auswerten der Daten durch den Controller, wobei das Auswerten eine Frequenzberechnung, insbesondere eine Biegemomentfrequenzberechnung und/oder eine Biegemomentberechnung beinhaltet.

Es wurde vorstehend zum ersten und zum zweiten Aspekt der hier vorliegenden Erfindung bereits erläutert, welche Vorteile durch ein solches Verfahren erreicht werden können.

In der Berechnung werden Daten bevorzugt in Klassen gruppiert.

Dies bedeutet, dass die Häufigkeit eines bestimmten Werts nicht auf den exakten Wert reduziert wird, sondern dass mehrere ähnliche Werte in vorher bestimmten Klassengrenzen einer Klasse zuzuordnen sind, so als sei derselbe Wert gemessen worden.

So kann beispielsweise im Biegemoment eine Amplitude von etwa 50 Nm gemessen werden. Eine rein beispielhafte Klassifizierung könnte dann so aussehen, dass die Amplituden von bestimmten Werten plus/minus 5 Nm jeweils dem Basiswert zugeschlagen werden, sodass beispielsweise sämtliche Messwerte von > 10,0 bis 20,0 Nm der Klasse um 15 Nm zugeschlagen werden.

Bei einer geschickten Auswahl von Klassen werden die Messwerte für das Bedienpersonal so leichter verständlich aufbereitbar.

Es wurde bereits erwähnt, dass die Amplituden überwacht werden können, vor allem die Amplituden des Biegemoments. Bei Prototypenversuchen hat sich eine Klasse um etwa 5 Hz bis 6 Hz als besonders wichtig herausgestellt.

Es scheint sinnvoll, die Daten einer Frequenzbandbreite von mindestens 0,2 Hz, vor allem von mindestens 0,5 Hz oder mindestens 1 Hz in eine Klasse zu werten, wenn eine Frequenzberechnung angestellt wird; hinsichtlich der Biegemomentberechnung scheint es sinnvoll, die Daten einer Biegemomentbandbreite von mindestens 5 Nm, vor allem von mindestens 10 Nm, in eine Klasse zu werten.

Der Wertebereich von 0 Hz bis 1 Hz entspricht dem statischen Offset.

Dasselbe kann analog für den Offset des Biegemoments durchgeführt werden.

Um den Verschleiß des Extruders zu erfassen und auch weiter vorhersagen zu können, wird vorgeschlagen, dass vor allem das Offset des Biegemoments auf Änderung überwacht wird, insbesondere auf Reduzierung.

Ebenso kann alternativ oder kumulativ die Amplitude des Biegemoments auf Änderung überwacht werden, vor allem auf Reduzierung.

Eine geschickte, die Lebenserwartung der Extruder erhöhende Maßnahme kann darin liegen, die Kupplung, insbesondere eine Sicherheitsrutschkupplung, bei fortschreitendem Verschleiß sensibler auslösend einzustellen.

Die Erfindung wird nachstehend anhand von Versuchsprotokollen näher erläutert.

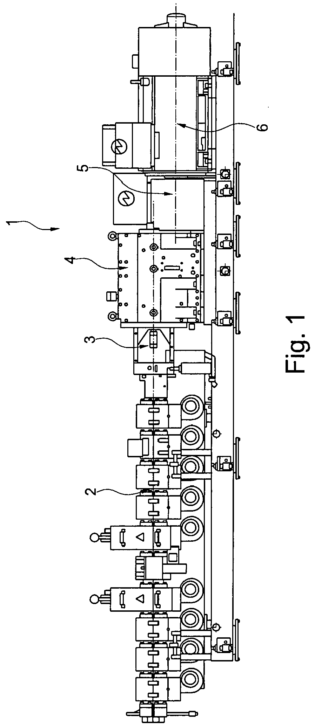

Es zeigt Figur 1 schematisch eine Systembeschreibung eines Doppelschneckenextruders 1 mit einer Doppelschnecke 2, angeschlossen über Messkupplungen 3, ein Getriebe 4 und eine Sicherheitsrutschkupplung 5 an einen Antriebsstrang 6 mit Motor.

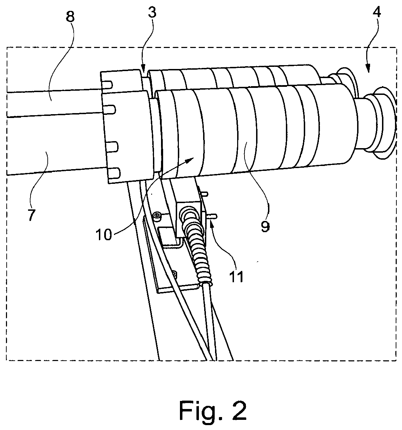

Figur 2 lässt die Messkupplungen 3 besser erkennen. Diese sind zwischen dem Getriebe 4 und den Schneckenwellen 7, 8 angeordnet. An den Messkupplungen 3 sind Dehnmessstreifen 9 (exemplarisch gekennzeichnet) angebracht.

Gleichzeitig läuft mit den Schneckenwellen 7, 8 jeweils eine Rotorantenne 10 unmittelbar über einer Statorantenne 11 um.

Die Drehmomentmessung sowie die Biegemomentmessung erfolgt über an den Messkupplungen 3 angebrachte Dehnmessstreifen 9. Bei Torsion oder Biegung der Schneckenwellen 7, 8 ändert sich der ohmsche Widerstand der Dehnmessstreifen 9. Über eine Vollbrücke wird durch die Widerstandsänderung eine Messspannung erzeugt, welche proportional zum Dreh- bzw. Biegemoment ist. Die Messspannung wird anschließend über einen Signalverstärker verstärkt und durch einen Analog/Digitalwandler in eine Bitfolge umgesetzt. Über die Rotorantenne 10 erfolgt dann die drahtlose Übertragung der digitalisierten Sensorwerte von den Messkupplungen 3 auf die Statorantennen 11.

Von den Statorantennen 11 werden die Daten anschließend über Kabel an eine Auswerteinheit übertragen (hier nicht dargestellt). Über einen Digital/Analogwandler wird wieder ein analoges Ausgangssignal ausgegeben, welches dann entweder durch einen Analog/Digitalwandler an einen PC übertragen werden konnte, oder das hier verwendete Messsystem konnte die Daten direkt einlesen und verarbeiten.

Verwendet wurde ein Messsystem der Manner Sensortelemetrie GmbH, 78549 Spaichingen, Deutschland.

Nachstehend werden Auszüge aus den Versuchen der Erfinder präsentiert, die dem Fachmann die Erfindung näher erläutern:

### Protokollauszüge der Versuche

### Figuren der Versuchsprotokolle:

- Fig. 3: Verschlissener (rechts) und neuer (links) Knetblock
- Fig. 4: Verschlissenes (rechts) und neues (links) Förderelement
- Fig. 5: Amplitude Drehmoment links bei Prototyp
- Fig. 6: Amplitude Drehmoment rechts bei Prototyp
- Fig. 7: Offset Drehmoment links bei Prototyp
- Fig. 8: Offset Drehmoment rechts bei Prototyp
- Fig. 9: Amplitude Biegemoment links bei Prototyp
- Fig. 10: Amplitude Biegemoment rechts bei Prototyp
- Fig. 11: Offset Biegemoment links bei Prototyp
- Fig. 12: Offset Biegemoment rechts bei Prototyp
- Fig. 13: Mittelwert Drehmoment Variation des spezifischen Durchsatzes am Prototyp
- Fig. 14: Amplitude Drehmoment, Variation des spezifischen Durchsatzes am Prototyp
- Fig. 15: Amplitude Drehmoment, Variation Druck an der Schneckenspitze am Prototyp
- Fig. 16: Amplitude Drehmoment, Variation des absoluten Durchsatzes am Prototyp
- Fig. 17: Mittelwert Biegemoment, Variation des absoluten Durchsatzes am Prototyp
- Fig. 18: Frequenzspektrum Biegemoment rechts
- Fig. 19: Frequenzspektrum Biegemoment links

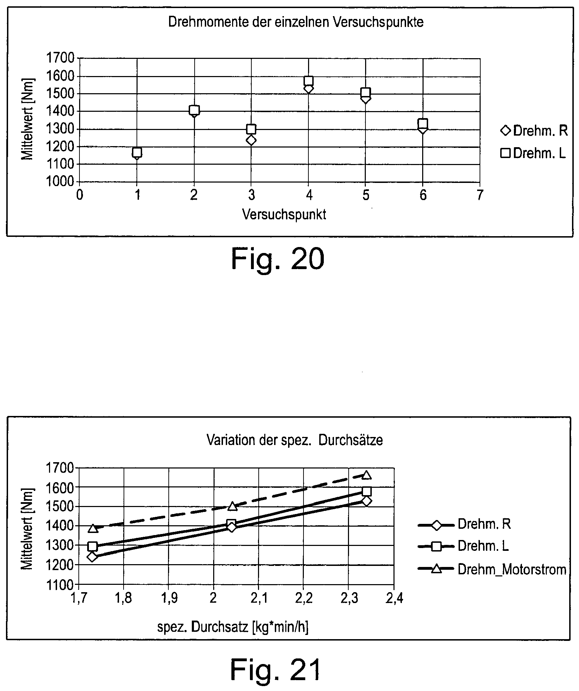

- Fig. 20: Drehmomente der Versuchspunkte
- Fig. 21: Variation der spezifischen Durchsätze

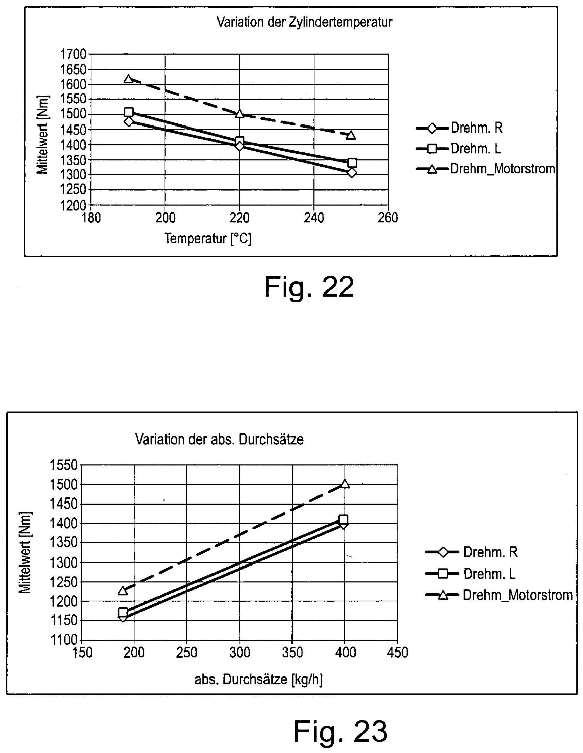

- Fig. 22: Variation der Zylindertemperatur
- Fig. 23: Variation der absoluten Durchsätze

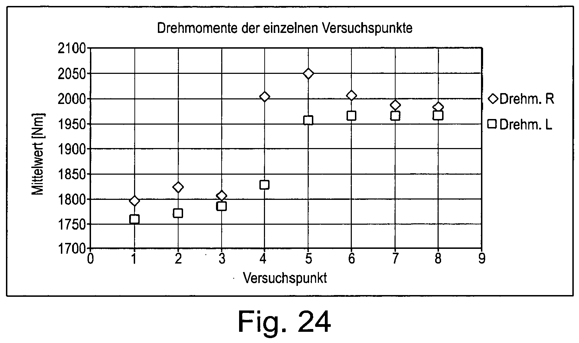

- Fig. 24: Drehmomente der Versuchspunkte

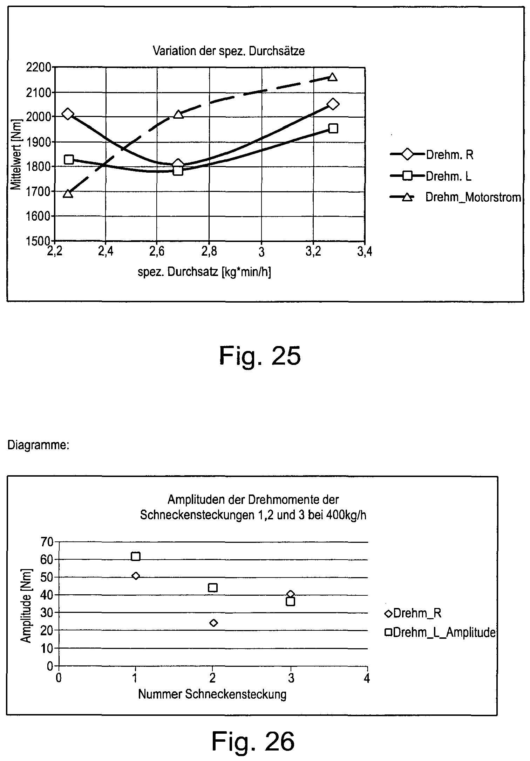

- Fig. 25: Variation der spezifischen Durchsätze
- Fig. 26: Amplituden der Drehmomente der Schneckensteckungen 1, 2 und 3 bei 400 kg/h

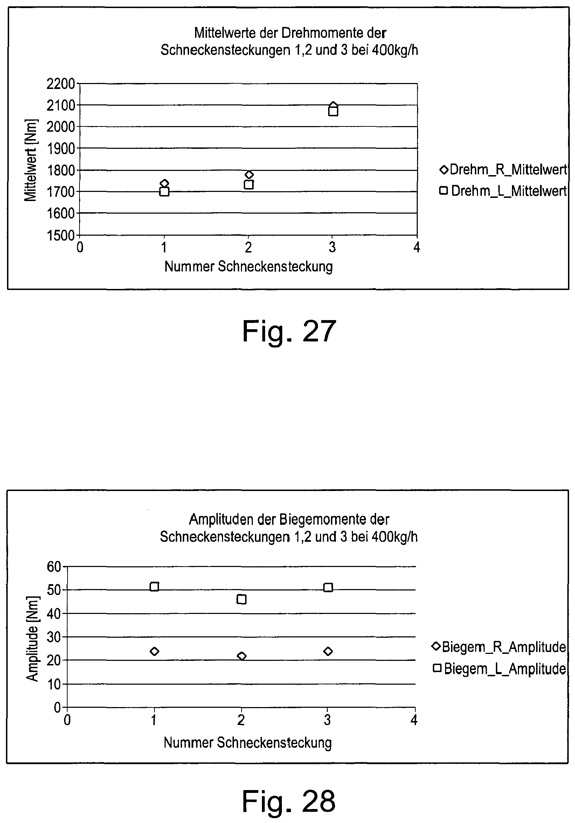

- Fig. 27: Mittelwerte der Drehmomente der Schneckensteckungen 1, 2 und 3 bei 400 kg/h
- Fig. 28: Amplituden der Biegemomente der Schneckensteckungen 1, 2 und 3 bei 400 kg/h

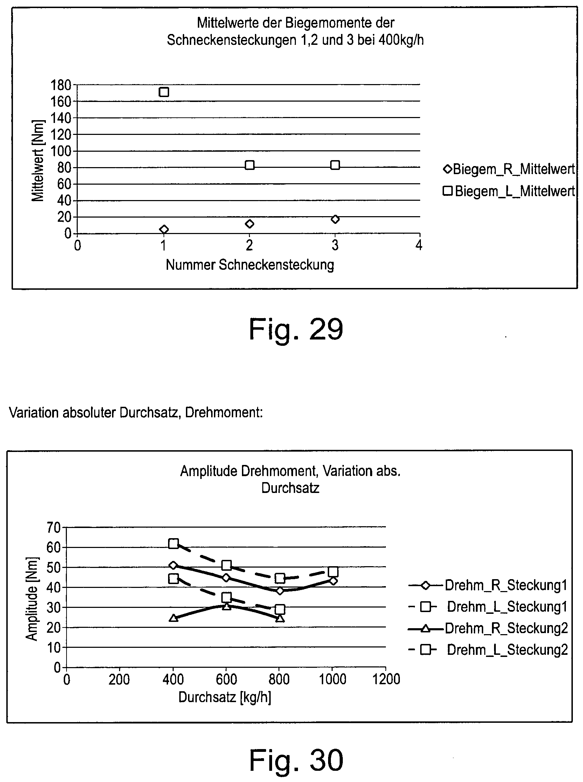

- Fig. 29: Mittelwerte der Biegemomente der Schneckensteckungen 1, 2 und 3 bei 400 kg/h
- Fig. 30: Amplitude Drehmoment, Variation des absoluten Durchsatzes

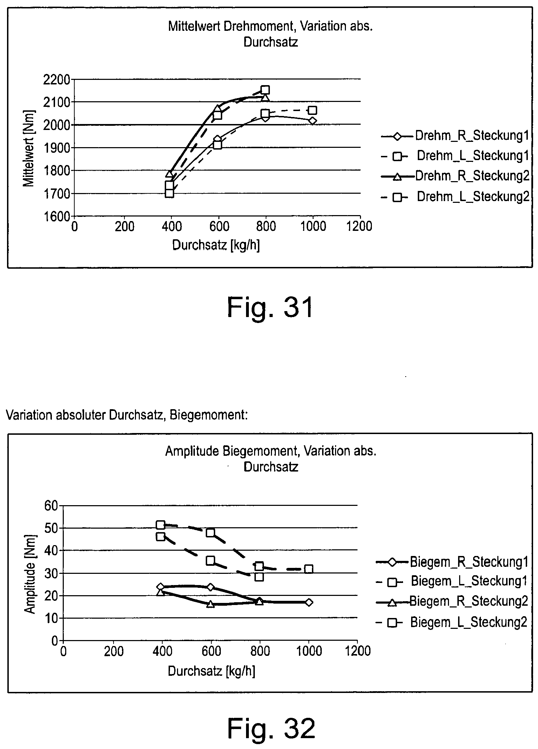

- Fig. 31: Mittelwert Drehmoment, Variation des absoluten Durchsatzes
- Fig. 32: Amplitude Biegemoment, Variation des absoluten Durchsatzes

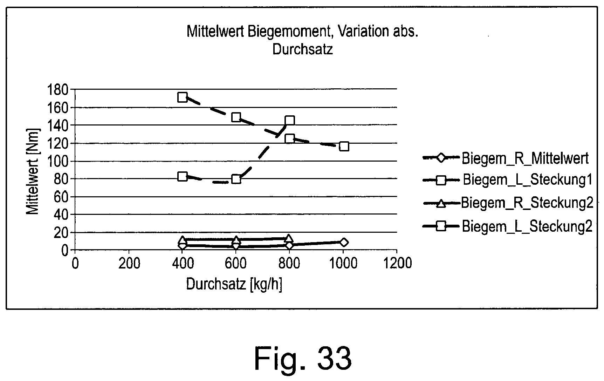

- Fig. 33: Mittelwert Biegemoment, Variation des absoluten Durchsatzes

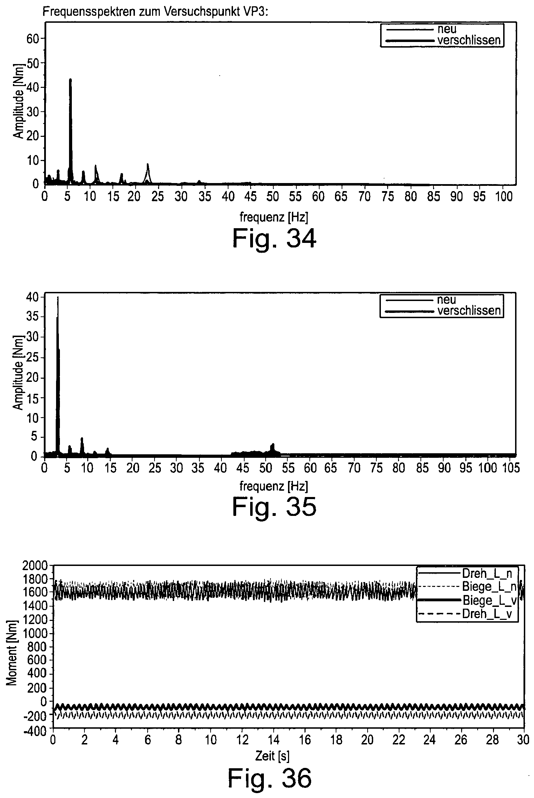

- Fig. 34: Drehmoment linke Schnecke (Frequenzbereich)
- Fig. 35: Biegemoment links (Frequenzbereich)
- Fig. 36: Dreh- und Biegemomente links (über einen Zeitbereich)

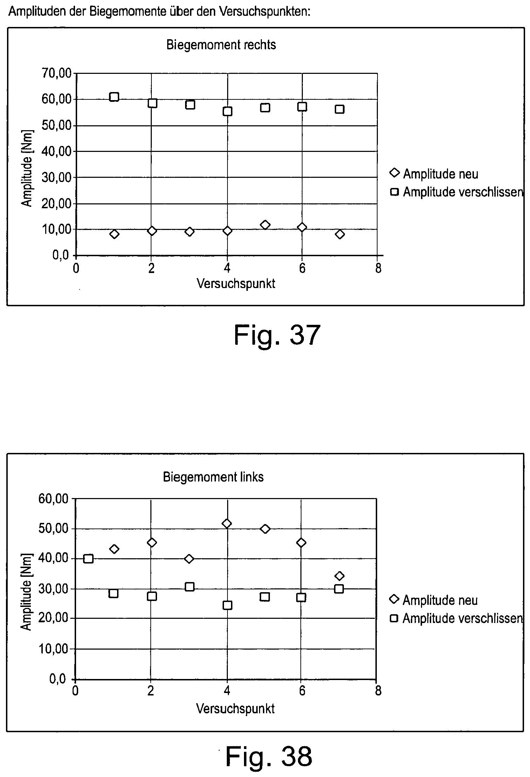

- Fig. 37: Amplituden der Biegemomente über den Versuchspunkten, Biegemoment rechts
- Fig. 38: zugehöriges Biegemoment links

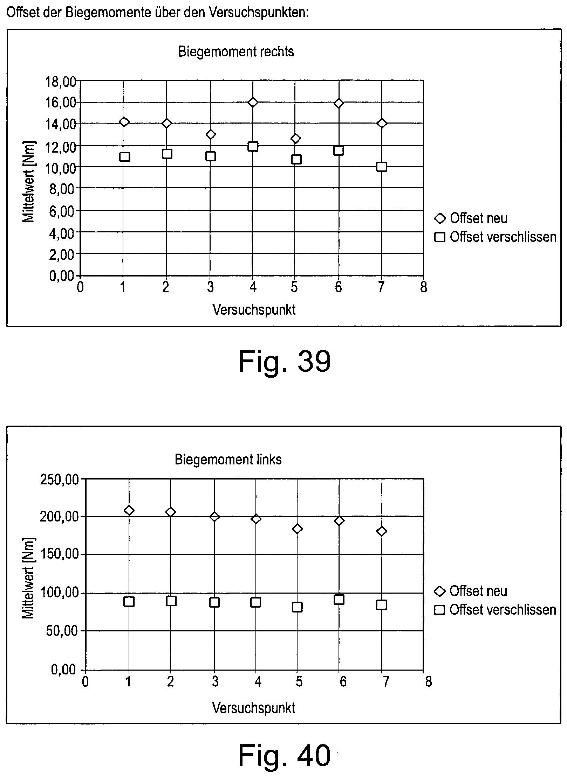

- Fig. 39: Offset der Biegemomente über den Versuchspunktion, Biegemoment rechts
- Fig. 40: zugehöriges Biegemoment links

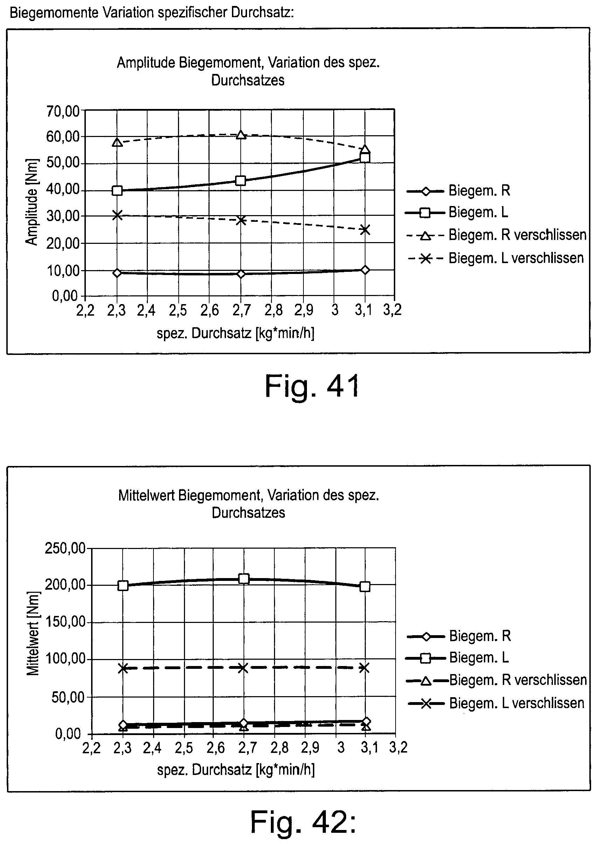

- Fig. 41: Biegemomente bei Variation des spezifischen Durchsatzes, Amplitude Biegemoment
- Fig. 42: zugehöriger Mittelwert des Biegemoments

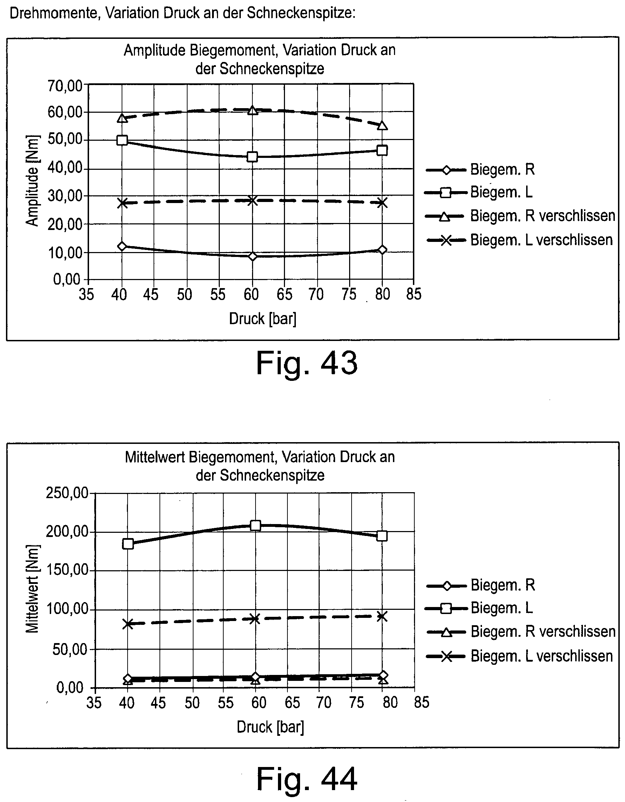

- Fig. 43: Drehmomente bei Variation des Drucks an der Schneckenspitze, Amplitude Biegemoment
- Fig. 44: zugehöriger Mittelwert des Biegemoments

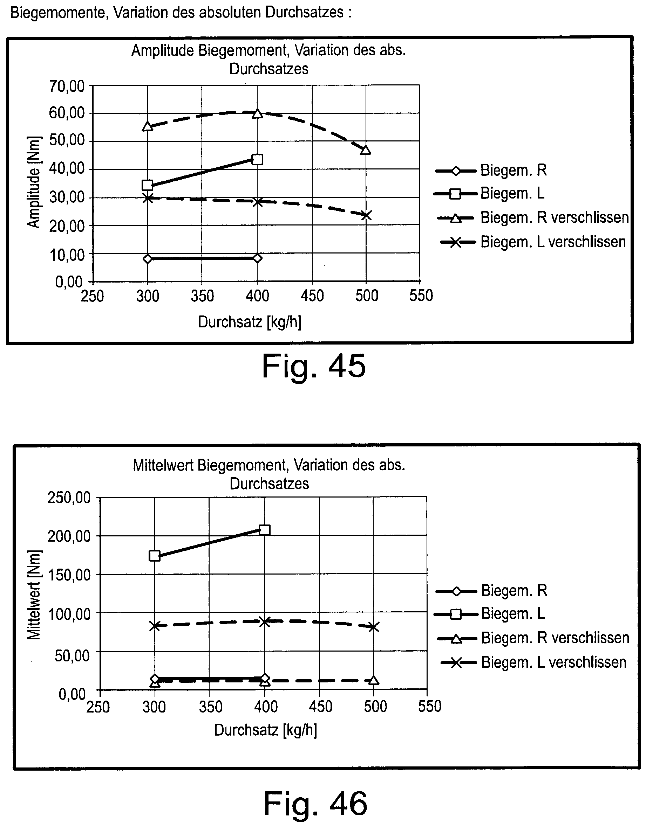

- Fig. 45: Biegemomente bei Variation des absoluten Durchsatzes, Amplitude Biegemoment
- Fig. 46: zugehöriger Mittelwert des Biegemoments

Die eingesetzte Sensorik erlaubt es, einen Einblick in die jeweils aktuellen Belastungszustände der Schnecken zu gewinnen. Für die Verschleißuntersuchungen gilt es herauszubekommen, ob die eingesetzte Sensorik auch dafür geeignet ist, einen Schneckenverschleiß zu detektieren.

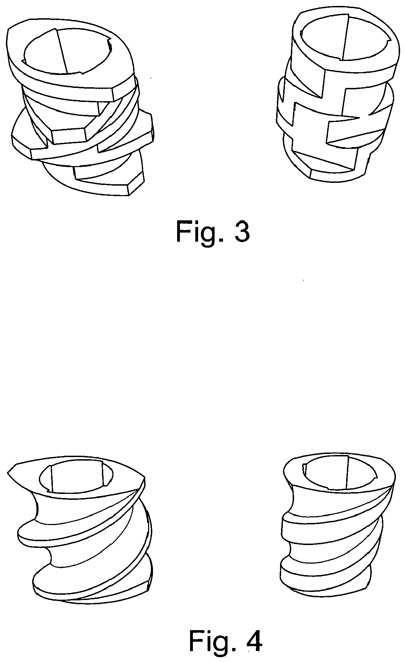

Dafür sollen die Dreh- und Biegemomentsignale einer neuwertigen Schnecke aufgezeichnet werden, um anschließend als Referenzsignal zu dienen. In den nachfolgenden Messungen gilt es dann einen zunächst relativ starken Verschleiß einzelner Segmente künstlich nachzubilden. Dafür werden einzelne Segmente an den Stellen, an denen erfahrungsgemäß mit stärkerem Verschleiß zu rechnen ist, maschinell nachbearbeitet. Die beteiligten Knetblöcke und Schneckensegmente werden dafür um ca. 10 mm im Durchmesser reduziert, um einen starken Verschleißzustand zu repräsentieren (s. Fig. 3 und Fig. 4).

Im Anschluss gilt es dann die gleichen Versuchspunkte wie auch bei den Referenzmessungen anzufahren, um eine gute Vergleichbarkeit der Ergebnisse zu gewährleisten. Durch den Vergleich der Messwerte soll dann eine Aussage darüber getroffen werden, ob es möglich ist, durch Änderungen in den Messwerten auf einen Schneckenverschleiß aufmerksam zu machen.

### Versuchsdurchführung

Sowohl bei den Referenzmessungen als auch bei den nachfolgenden Versuchen wird PP-MFI-3 als Rohstoff eingesetzt.

Es wird ein Versuchsplan erstellt, bei dem sowohl der absolute Durchsatz als auch der spezifische Durchsatz und auch der Druck an der Schneckenspitze variiert werden (s. Tabelle 1). Somit können die Änderungen der Messwerte durch Variation der Maschinenparameter direkt eventuellen Änderungen durch den Verschleiß gegenübergestellt werden.

Um eventuell nachfolgende statistische Untersuchungen zu erleichtern, wird ein Versuchspunkt mit einem absoluten Durchsatz von 400 kg/h einem spez. Durchsatz von 2,7 kg*min/h und einem Druck von 60 bar als Mittelpunkt definiert (Zeile Nr. 1 der Tabelle). Ausgehend von diesem Versuchspunkt werden dann sowohl der absolute Durchsatz, der spez. Durchsatz als auch der Druck an der Schneckenspitze variiert (spezifischer Durchsatz in den Zeilen 3 und 4; Druck in den Zeilen 5 und 6; und absoluter Durchsatz in den Zeilen 7 und 8). Die Versuchspunkte für die Verschleißuntersuchungen sind in Tabelle 1 aufgelistet. Außerdem wird der zweite Versuchspunkt mit den gleichen Parametern wie der erste angefahren, um die Schwankungen beim wiederholten Messen eines Versuchspunktes zu untersuchen.

**Tabelle 1: Versuchsplan der Verschleißuntersuchungen**

| Nr. | AD [kg/h] | SD [kg*min/h] | P [bar] | T [°C] | D [1/min] |
|---|---|---|---|---|---|
| 1 | 400 | 2,7 | 60 | 240 | 148,1 |
| 2 | 400 | 2,7 | 60 | 240 | 148,1 |
| 3 | 400 | 2,3 | 60 | 240 | 173,9 |
| 4 | 400 | 3,1 | 60 | 240 | 129,0 |
| 5 | 400 | 2,7 | 40 | 240 | 148,1 |
| 6 | 400 | 2,7 | 80 | 240 | 148,1 |
| 7 | 300 | 2,7 | 60 | 240 | 111,1 |
| 8 | 500 | 2,7 | 60 | 240 | 185,2 |

| | | | | | |
|---|---|---|---|---|---|
| AD: absoluter Durchsatz SD: spezifischer Durchsatz P: Druck T: Temperatur D: Drehzahl | | | | | |

Jeder Versuchspunkt wird zunächst über einen gewissen Zeitraum stabilisiert. Im Anschluss werden über einen Zeitbereich von fünf Minuten die Dreh- und Biegemomente über das Ganter Messsystem aufgezeichnet. Die Messwerte werden über das Messsystem mit einer Grenzfrequenz von 500 Hz tiefpassgefiltert und mit einer Abtastfrequenz von 5000 Hz abgetastet. Die Abtastrate ist somit mindestens 10-mal höher als die maximal im Signal vorkommende Frequenz, sodass Aliasingfehler möglichst vermieden werden.

Als Aliasingfehler bezeichnet man Fehler, die dadurch zustande kommen, dass im Signal Frequenzen vorkommen die oberhalb der Nyquist-Frequenz (die Hälfte der Abtastfrequenz) liegen. Das ursprüngliche Signal ist dadurch nach der Abtastung verfälscht. Je höher die Abtastrate gewählt wird, desto höher ist die Genauigkeit des rekonstruierten digitalisierten Signals. Allerdings ist dies auch mit einem erhöhten Rechenaufwand und größerer Datenmenge verbunden.

Die Messergebnisse aus den Versuchsreihen werden zunächst durch eine Fast-Fourier-Transformation (FFT; als Fast-Fourier-Transformation bezeichnet man eine rechenzeitoptimierte Variante der Diskreten-Fourier-Transformation) in den Frequenzbereich überführt. In den Frequenzspektren werden dann die im Signal vorhandenen Frequenzen, die dazugehörigen Amplituden und das Offset der Dreh- und Biegemomentschwingungen ausgewertet. Für die Durchführung der Fast-Fourier-Transformation wird ein Scilab-Programmcode geschrieben. Die Amplituden der FFT werden normiert, sodass die Amplituden der einzelnen Schwingungsanteile direkt aus dem Frequenzspektrum abgelesen werden können. Außerdem werden die Messwerte mit der Hanning Fensterfunktion multipliziert. Das Offset der Schwingungen sowie die Amplituden der Grundfrequenz können direkt aus dem Variablen-Browser des Simulationsprogrammes abgelesen werden und brauchen somit nicht mehr aufwendig im Zeitbereich analysiert zu werden. Außerdem ist es somit möglich, alle anderen Frequenzanteile unterhalb der Grenzfrequenz von 500 Hz mit den dazugehörigen Amplituden aus dem Frequenzspektrum abzulesen.

Bei dem Simulationsprogramm Scilab handelt es sich um ein universelles Open-Source Softwarepaket, das sehr ähnliche Funktionen wie Matlab aufweist. Auch die Programmiersprache ist der von Matlab sehr ähnlich.

### Versuchsergebnisse

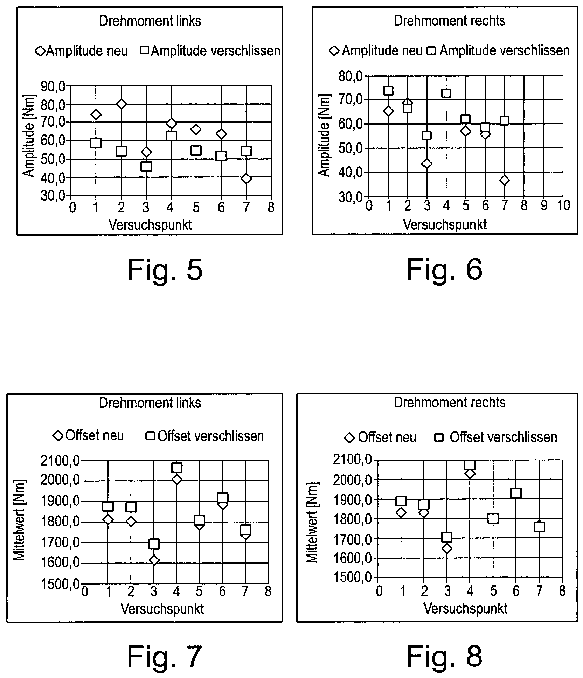

Zunächst werden die Amplituden und Mittelwerte der Drehmomente von linker und rechter Schneckenwelle der acht Versuchspunkte betrachtet. Wie in Fig. 6 zu erkennen ist, weist bei der rechten Schneckenwelle die verschlissene Schnecke eine höhere Amplitude auf als die neuwertige Schneckenwelle. Bei der linken Schneckenwelle (s. Fig. 5) verhält es sich genau entgegengesetzt, sodass die neuwertige Schneckenwelle eine höhere Amplitude aufweist als die verschlissene. Dies gilt für nahezu alle Versuchspunkte. Die Versuchspunkte zwei in Fig. 6 und sieben in Fig. 5 werden daher zunächst als Ausreißer angesehen. Außerdem wird deutlich, dass die linke Schneckenwelle bei der neuwertigen Schnecke eine höhere Amplitude aufweist als die rechte Schnecke. Bei der verschlissenen Schnecke verhält sich dies genau entgegengesetzt.

Betrachtet man die Mittelwerte der Drehmomente, so weist die verschlissene Schneckenwelle sowohl auf der rechten, als auch auf der linken Seite eine höhere Belastung auf als die neuwertige Schnecke (s. Fig. 7 und Fig. 8). Die Mittelwerte der rechten neuwertigen Schneckenwelle sind etwas höher als die der linken. Dies gilt auch für die verschlissene Schnecke. Allerdings ist dort der Unterschied zwischen linker und rechter Schneckenwelle weniger stark ausgeprägt.

Alle Graphen zeigen deutlich, dass die Mittelwert- bzw. Amplitudenänderung zwischen verschlissener und neuwertiger Schnecke relativ gering ist. Die Schwankungen der Amplituden und Mittelwerte zwischen den einzelnen Versuchspunkten sind wesentlich größer, sodass man sich immer auf den aktuellen Betriebszustand beziehen muss, um eine Aussage über den Verschleiß treffen zu können. Außerdem ist zunächst noch unbekannt, wie groß die Schwankungen beim wiederholten Anfahren eines Versuchspunktes sind. Falls die Betriebsparameter wie Material, Temperaturprofil, Durchsatz etc. häufig geändert werden, wird die Chance, einen Schneckenverschleiß zuversichtlich über Amplituden oder Mittelwertänderungen der Drehmomente festzustellen, als eher gering eingestuft.

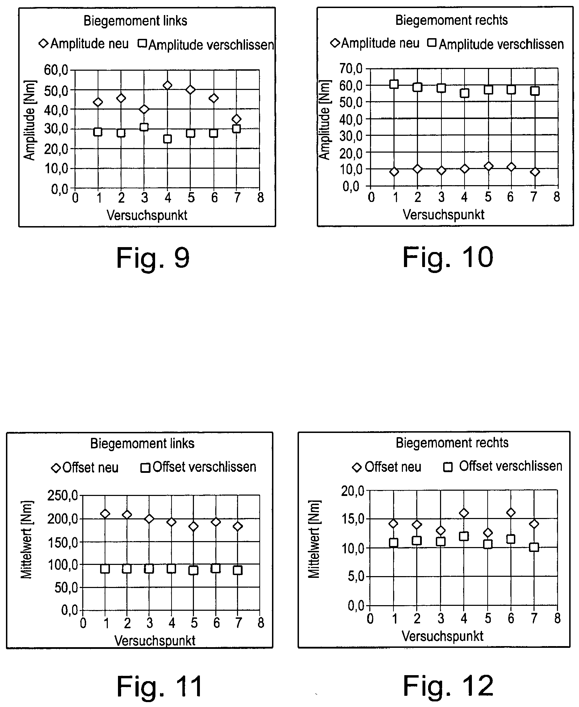

Im Anschluss werden die Amplituden und Mittelwerte der Biegemomentsignale ausgewertet. Wie in Fig. 9 und Fig. 10 deutlich zu erkennen ist, steigt die Amplitude der verschlissenen Schneckenwelle auf der rechten Seite stark an, während sie auf der linken Seite leicht abfällt.

Betrachtet man die Mittelwerte der Biegemomente, so wird ersichtlich, dass sich das Offset der rechten Schneckenwelle kaum ändert, während der Mittelwert der verschlissenen linken Schneckenwelle nur noch ca. 50 % der neuwertigen beträgt (s. Fig. 11 und Fig. 12). Dies gilt für alle Versuchspunkte.

Wie auch schon bei den Drehmomenten, zeigt sich auch bei den Biegemomenten an der rechten Welle eine Erhöhung der Amplitude bei verschlissener Schneckenwelle und an der linken Welle eine Verringerung.

Die Amplitude des Biegemomentes an der rechten Schneckenwelle scheint sich auf den ersten Blick sehr gut für die Verschleißmessung zu eignen. Die Amplitudenänderung durch den Schneckenverschleiß erweist sich gegenüber der Änderung zwischen den einzelnen Versuchspunkten als relativ ausgeprägt (s. Fig. 10). Dies gilt jedoch zunächst nur für die vorliegende Schneckensteckung sowie den vorgegebenen starken Verschleiß an Knetblock und Fördersegment. Daher ist es nicht auszuschließen, dass sich die Amplitude des Biegemomentes bei einer anderen Schneckensteckung, anderer Position der verschlissenen Segmente oder auch anderem Rohstoff wiederum als unbrauchbar erweist. Allerdings zeigen die Versuche mit unterschiedlichen Steckungen für alle drei Steckungen, obwohl mit PET auch ein anderer Rohstoff verarbeitet wurde, ähnliche Ergebnisse wie die Messungen mit der neuwertigen Schnecke. Trotzdem werden weitere Versuche als empfehlenswert angesehen, um die starke Änderung der Amplitude auch für andere Bedingungen zu verifizieren und eventuelle Messfehler auszuschließen.

Bei der linken Schneckenwelle erweist sich die Amplitude als weniger aussagekräftig. Allerdings lässt sich beim Mittelwert des Biegemomentes eine deutliche Verringerung der verschlissenen Schnecke um ca. 50 % gegenüber der neuwertigen feststellen (s. Fig. 11). Auch diese ist, wie auch die Amplitude der rechten Schneckenwelle, nur geringen Schwankungen durch die unterschiedlichen Versuchspunkte ausgesetzt. Allerdings sollte auch die Änderung des Mittelwertes der linken Schnecke durch weitere Versuche verifiziert werden.

Des Weiteren gilt es noch wie auch bei den vorrangegangenen Versuchen eventuelle Abhängigkeiten der Messwerte von Betriebsparametern, wie z.B. Temperaturprofil, abs. Durchsatz, spez. Durchsatz und Druck, zu untersuchen.

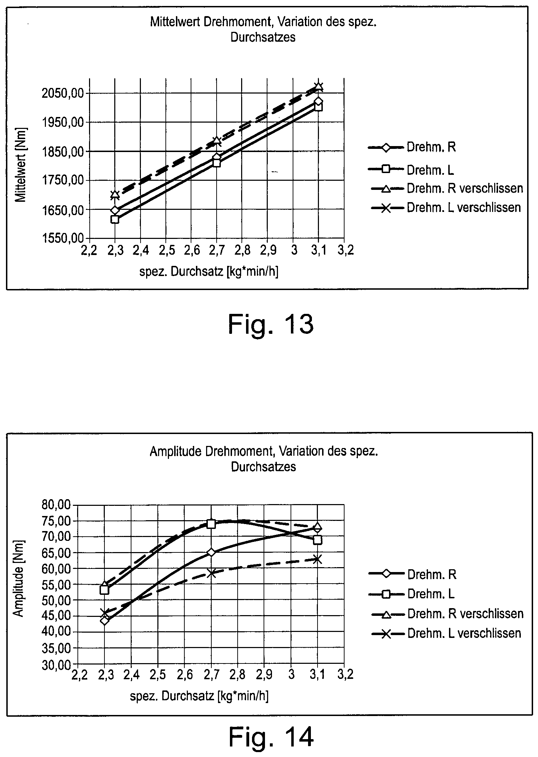

Der spezifische Durchsatz wird bei einem konstanten absoluten Durchsatz von 400 kg/h und einem konstanten Druck an der Schneckenspitze von 60 bar variiert. Erhöht man den spezifischen Durchsatz, so ist in Fig. 13 ein deutlicher nahezu linearer Anstieg der Mittelwerte der Drehmomente zu erkennen. Bei den Amplituden ist keine eindeutige Abhängigkeit zu erkennen. Während die Amplituden der rechten neuwertigen Schnecke und der linken verschlissenen Schnecke kontinuierlich mit der Erhöhung des spezifischen Durchsatzes ansteigen, fallen die der rechten verschlissenen Schnecke und der linken neuwertigen Schnecke (s. Fig. 14). Somit kann über die Änderung der Amplitude keine verlässliche Aussage getroffen werden. Auch bei den Amplituden der Biegemomente ist es ähnlich wie auch bei den Drehmomenten nicht möglich, eine eindeutige Aussage zu treffen. Die Mittelwerte der Biegemomente bleiben relativ konstant. Die Ergebnisse können im Versuchsprotokoll zu den Verschleißmessungen im Anhang eingesehen werden.

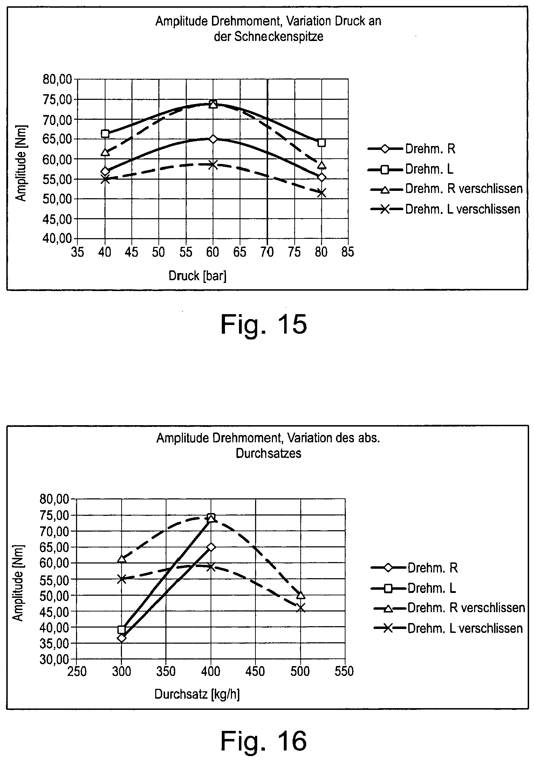

Des Weiteren wurde in den Versuchen der Druck an der Schneckenspitze variiert bei einem konstanten spezifischen Durchsatz von 2,7 kg*min/h und einem konstanten absoluten Durchsatz von 400 kg/h. Die Amplituden der Drehmomente zeigen zunächst einen Anstieg bei einer Erhöhung von 40 auf 60 bar und fallen bei weiterer Druckerhöhung von 60 auf 80 bar auf den tiefsten Punkt (s. Fig. 15). Die Mittelwerte der Drehmomente steigen hingegen mit zunehmendem Druck kontinuierlich an.

Die Amplituden der Biegemomente verhalten sich je nachdem, ob die verschlissene oder neuwertige Schnecke betrachtet wird, unterschiedlich. Bei den neuwertigen Schnecken fällt die Amplitude bei einer Druckerhöhung von 40 auf 60 bar und steigt bei einer Erhöhung von 60 bar auf 80 bar wieder leicht an. Bei den verschlissenen Schnecken hingegen steigt die Amplitude bei einer Erhöhung auf 60 bar leicht an und fällt bei weiterer Erhöhung auf 80 bar wieder leicht ab. Die Mittelwerte der Biegemomente steigen bei der Druckerhöhung leicht an. Der Mittelwert der linken neuwertigen Schnecke bildet dabei einen Ausreißer, da er bei einer Erhöhung von 60 bar auf 80 bar leicht abfällt.

Außer dem Druck und dem spezifischen Durchsatz wurde auch noch der absolute Durchsatz bei konstantem Druck von 60 bar und konstanten spezifischen Durchsatz von 2,7 kg*min/h variiert.

Mit der verschlissenen Schnecke konnten alle drei Versuchspunkte angefahren werden. Wie auch bei der Variation des Drucks steigen bei einer Steigerung des abs. Durchsatzes von 300 kg/h auf 400 kg/h die Amplituden der Drehmomente zunächst leicht an und fallen dann bei weiterer Steigerung auf 500 kg/h relativ stark ab (s. Fig. 16). Das Verhalten der Amplituden der Biegemomentsignale ist in etwa vergleichbar.

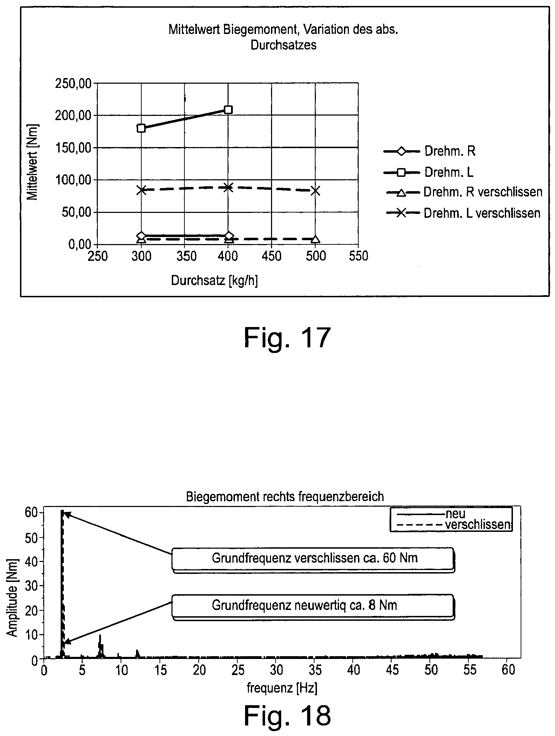

Die Mittelwerte der Drehmomente steigen mit einer Steigerung des absoluten Durchsatzes kontinuierlich an. Die Mittelwerte der Biegemomente verhalten sich wie auch in allen anderen Graphen relativ konstant. Einzig der Mittelwert der linken neuwertigen Schnecke bildet einen Ausreißer (s. Fig. 17).

Zum Schluss werden noch die verschiedenen Frequenzanteile, die in den Dreh- und Biegemomentsignalen in den einzelnen Versuchspunkten vorkommen, untersucht. Deutlich zu erkennen sind dabei die unterschiedlichen Amplituden der Grundfrequenz von Referenzsignal und dem Signal der verschlissenen Schneckensegmente (s. Fig. 18).

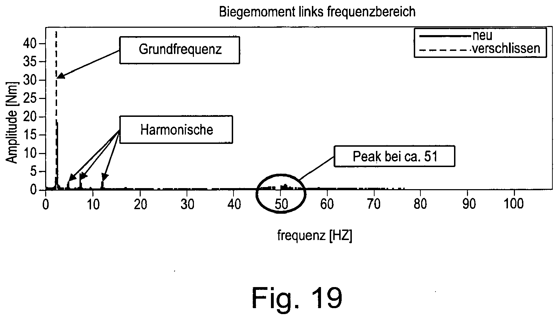

Bei den anderen Frequenzanteilen handelt es sich größtenteils um harmonische Schwingungsanteile der Grundfrequenz. Im Vorfeld wurde gehofft, dass sich ähnlich wie bei einem Lagerschaden bei der verschlissenen Schnecke eine Schwingung einstellt, die keine Harmonische der Grundfrequenz darstellt. Allerdings konnte dies durch die Messwerte nicht bestätigt werden. Es ist lediglich bei den Biegemomenten eine geringe Amplitude bei einer Frequenz von ca. 51 Hz zu erkennen, die jedoch zum Teil im Referenzsignal als auch beim Signal der verschlissenen Segmente zu beobachten ist (s. Fig. 19). Außerdem liegt es nahe, dass eventuell eine Netzfrequenz von 50 Hz handelt, die die Biegemomentsignale beeinflusst.

### Zusammenfassung und Ausblick

Die Versuche der Verschleißuntersuchungen zeigen, dass eine Online-Verschleißmessung mithilfe der eingesetzten Sensorik durchaus denkbar wäre.

Während die Messdaten der Drehmomente eine eher geringere Aussagekraft bezüglich des Schneckenverschleißes aufweisen, sind in den Biegemomentsignalen deutliche Änderungen in den Messwerten durch den Einsatz verschlissener Schneckensegmente zu erkennen.

Somit kommt es bei der rechten Schneckenwelle beim Einsatz der verschlissenen Segmente zu einer Amplitudenerhöhung von ca. 400 % bis 600 % gegenüber dem Referenzsignal mit einer relativ geringen Abhängigkeit von Durchsatz, Druck etc. Allerdings ist diese Amplitudenerhöhung bei der linken Schneckenwelle nicht zu erkennen. Diese wird sogar durch den Einsatz der verschlissenen Segmente leicht verringert. Relativ deutlich ist jedoch bei der linken Schnecke eine Veränderung des Offsets zu beobachten. Während das Offset der rechten Schnecke nahezu unverändert bleibt, reduziert sich das Offset der linken Schnecke um ca. 50 %. Ähnlich wie bei der Amplitude der rechten Schneckenwelle weist auch das Offset der linken Welle nur eine geringe Abhängigkeit von den eingestellten Maschinenparametern auf.

Wie auch in den vorangegangenen Versuchen auf dem Prototypen weist das Biegemoment der rechten Schnecke eine wechselnde Belastung und das der linken eine schwellende Belastung auf. Bei den neuwertigen Schneckensegmenten sind der Mittelwert sowie die Amplitude der linken Schnecke deutlich höher als die der rechten Schnecke. Durch den Einsatz der verschlissenen Segmente steigt dann die Belastung der rechten Schneckenwelle an, während die Belastung der linken Schnecke deutlich abnimmt. Es ist jedoch nach wie vor eine wechselnde Belastung der rechten Schnecke und eine schwellende Belastung der linken Schneckenwelle zu beobachten.

Im Gegensatz zu den Biegemomenten weisen die Drehmomente nur geringe Änderungen in den Messdaten durch den Einsatz der verschlissenen Segmente auf. Außerdem sind starke Abhängigkeiten von Durchsatz, Druck etc. zu erkennen, die den Einsatz der Drehmomente für die Online-Verschleißmessung deutlich einschränken.

Vor allem das Verhalten der Biegemomente ist somit erfolgversprechend als Basis für die Verschleißbestimmung.

Des Weiteren gilt es eventuell noch den Einfluss unterschiedlicher Rohstoffe, unterschiedlicher Schneckensteckungen sowie unterschiedlicher Positionierung der verschlissenen Segmente auf die Messwerte zu untersuchen. Die Versuche unterschiedlicher Schneckensteckungen mit PET auf dem Prototypen zeigten jedoch ein ähnliches Verhalten der Biegemomente. Somit scheint die Schneckensteckung keinen sonderlich großen Einfluss auf die Biegemomente zu haben.

Außerdem muss noch bedacht werden, dass der künstlich nachgebildete Verschleiß zunächst als idealisiert angesehen werden muss. Somit ist der Verschleiß über den Umfang symmetrisch, über die Länge der Schneckensegmente konstant und an beiden Schneckenwellen gleich stark ausgeprägt. Dies entspricht auf keinen Fall der Wirklichkeit. Daher ist es nicht auszuschließen, dass auch eventuelle Langzeituntersuchungen nötig sind, da das reale Verschleißverhalten von den Versuchen abweichen wird.

Sollten sich allerdings auch bei weiteren Versuchen ähnlich starke Änderungen der Biegemomente beim Einsatz verschlissener Segmente zeigen, kann davon ausgegangen werden, dass eine zuversichtliche Früherkennung verschlissener Schneckensegmente durch eine Online-Verschleißmessung grundsätzlich möglich ist. Denkbar wäre dann beispielsweise eine periodisch durchgeführte Messung, in der die Amplituden und Mittelwerte der Biegemomente ausgewertet werden. Sobald dann beispielsweise festgelegte Grenzwerte überschritten werden, könnte durch einen Warnhinweis auf eine verschlissene Schneckenwelle aufmerksam gemacht werden. Dabei gilt es dann vor allem eine sinnvolle Grenze zwischen verschlissener und nicht verschlissener Schnecke zu ziehen.

### Weitere Tabellen:

### Messungen RZE 70 PP-Granula

**Tab. 2**

| Verfasser | Datum | Werkstoff | - | Anlage |
|---|---|---|---|---|
| P. Michels | 10.04.2014 | Polypropylen (PP) | Granulat | RZE 70 |

Versuchsplan:

**Tab. 3**

| Versuchs-Nr. | Schnecke | Temperatureinstellung [°C] | Durchsatz [kg/h] | spez. Durchsatz [kg*min/h] | Drehzahl [U/min] |
|---|---|---|---|---|---|
| 1 | links | 220 | 189 | 1,97 | 96 |
| | rechts | | | | |
| 2 | links | 220 | 399 | 2,04 | 196 |
| | rechts | | | | |
| 3 | links | 220 | 409 | 1,73 | 237 |
| | rechts | | | | |
| 4 | links | 220 | 391 | 2,34 | 167 |
| | rechts | | | | |
| 5 | links | 190 | 362 | 1,96 | 185 |
| | rechts | | | | |
| 6 | links | 250 | 387 | 2,02 | 192 |
| | rechts | | | | |

Versuchsergebnisse

**Tab. 4**

| Nr. | | Drehmoment Mittelwert | Motorstrom | Drehmoment Motorstrom | Abweichung | Drehmoment | Penodendauer | Penodendauer Schneckendrehung |
|---|---|---|---|---|---|---|---|---|
| | | [Nm] | [%] | [%] | [%] | Amplitude | Drehmoment[s] | [s] |
| 1 | L | 1170 | 55% | 1225,5 | 4,5 | 67,5 | 0,32 | 0,625 |
| | R | 1155 | | | 5,8 | 67,5 | 0,32 | |
| 2 | L | 1408 | 66% | 1503 | 6,3 | 76,5 | 0,16 | 0,31 |
| | R | 1391 | | | 7,5 | 77,5 | 0,15 | |
| 3 | L | 1296 | 60% | 1387 | 6,6 | 81,5 | 0,127 | 0,25 |
| | R | 1243 | | | 10,4 | 79,5 | 0,125 | |
| 4 | L | 1578 | 72% | 1665 | 5,2 | 86 | 0,175 | 0,36 |
| | R | 1531 | | | 8 | 81,5 | 0,178 | |
| 5 | L | 1507 | 70% | 1618 | 6,9 | 88 | 0,171 | 0,32 |
| | R | 1478 | | | 8,4 | 84,5 | 0,168 | |
| 6 | L | 1338 | 61% | 1443 | 6,6 | 77,5 | 0,16 | 0,31 |
| | R | 1304 | | | 9 | 75 | 0,15 | |

Variation der speziefischen Durchsätze:

**Tab. 5**

| Nr. | | spez. Durchsatz [kg*min/h] | Drehmoment | Änderung | Änderung | Drehmoment | Amplitude | Änderung | Änderung |
|---|---|---|---|---|---|---|---|---|---|
| | | | Mittelwert [Nm] | [Nm] | [%] | Motorstrom [Nm] | [Nm] | Amplitude [Nm] | Amplitude[%] |
| 2 | L | 2,04 | 1408 | - | - | 1503 | 76,5 | - | - |
| | R | | 1391 | - | - | | 77,5 | - | - |
| 3. | L | 1,73 | 1296 | -112,00 | -7,95 | 1387 | 81,5 | 5,00 | 6,54 |
| | R | | 1243 | -148,00 | -10,64 | | 79,5 | 2,00 | 2,58 |
| 4 | L | 2,34 | 1578 | 170,00 | 12,07 | 1665 | 86 | 9,50 | 12,42 |
| | R | | 1531 | 140,00 | 10,06 | | 81,5 | 4,00 | 5,16 |

Variation der Temperatur:

**Tab. 6**

| Nr. | | Temp. [°C] | Drehmoment Mittelwert [Nm] | Änderung [Nm] | Änderung [%] | Drehmoment Motorstrom [Nm] | Amplitude [Nm] | Änderung Amplitude | Änderung Amplitude [%] |
|---|---|---|---|---|---|---|---|---|---|
| 2 | L | 220 | 1408 | - | - | 1503 | 76,5 | - | - |
| | R | | 1391 | - | - | | 77,5 | - | - |
| 5 | L | 190 | 1507 | 99,00 | 7,03 | 1618 | 88 | 11,50 | 15,03 |
| | R | | 1478 | 87,00 | 6,25 | | 84,5 | 7,00 | 9,03 |
| 6 | L | 250 | 1338 | -70,00 | -4,97 | 1433 | 77,5 | 1,00 | 1,31 |
| | R | | 1304 | -87,00 | -6,25 | | 75 | -5,00 | -3,23 |

Variation der absoluten Durchsätze:

**Tab. 7**

| Nr. | | Durchsatz [kg/h] | Drehmoment Mittelwert [Nm] | Änderung [Nm] | Änderung [%] | Drehmoment Motorstrom [Nm] | Amplitude [Nm] | Änderung Amplituden | Änderung Amplitude [%] |
|---|---|---|---|---|---|---|---|---|---|
| 1 | L | 189 | 1170 | | - | 1225,5 | 67,5 | - | - |
| | R | | 1155 | - | - | | 67,5 | - | - |
| 2 | L | 399 | 1408 | 238,00 | 20,34 | 1503 | 76,5 | 9,00 | 13,33 |
| | R | | 1391 | 236,00 | 20,43 | | 76,5 | 10,00 | 14,81 |

### Messungen PET-Flakes:

**Tab. 8**

| Verfasser | Datum | Werkstoff | - | Anlage |
|---|---|---|---|---|
| P. Michels | 18.08.2014 | Polyethylenterephthala (PET) | Flakes | RZE 3.0 |

Versuchsplan:

**Tab. 9**

| Versuchs-Nr. | Schnecke | Temperatureinstellung [°C] | spez. Durchsatz [kg*min/h] | abs. Durchsatz [kg/h] | Drehzahl [U/min] |
|---|---|---|---|---|---|
| 1 | links | 285/270 | 2,74 | 460 | 168 |
| | rechts | | | | |
| 2 | links | 285/270 | 2,74 | 494 | 180 |
| | rechts | | | | |
| 3 | links | 285/270 | 2,68 | 475 | 177 |
| | rechts | | | | |
| 4 | links | 285/270 | 2,25 | 477 | 212 |
| | rechts | | | | |
| 5 | links | 285/270 | 3,28 | 469 | 143 |
| | rechts | | | | |
| 6 | links | 285/270 | 2,67 | 800 | 300 |
| | rechts | | | | |
| 7 | links | 285/270 | 2,66 | 770 | 290 |
| | rechts | | | | |
| 8 | links | 285/270 | 2,65 | 795 | 300 |
| | rechts | | | | |

Versuchsergebnisse Drehmomente:

**Tab. 10**

| Nr. | | Temp. [°C] | spez. Durchsatz [kg*min/h] | abs. Durchsatz [kg/h] | Drehmom. Mittelwert [Nm] | MotorStrom [%] | Drehmom. Motorstrom [Nm] | Periodend. Drehmoment [s] | Periodend. Schnecke [s] |
|---|---|---|---|---|---|---|---|---|---|
| 1 | L | 285/ 270 | 2,74 | 460 | 1757 | 67 | 2043,5 | 0,175 | 0,36 |
| | R | | | | 1796 | | | 0,175 | |
| 2 | L | 285/ 270 | 2,74 | 494 | 1771 | 63 | 1921,5 | 0,16 | 0,33 |
| | R | | | | 1822 | | | 0,16 | |
| 3 | L | 285/ 270 | 2,68 | 475 | 1785 | 66 | 2013 | 0,16 | 0,34 |
| | R | | | | 1807 | | | 0,16 | |
| 4 | L | 285/ 270 | 2,25 | 477 | 1828 | 56 | 1693 | 0,15 | 0,28 |
| | R | | | | 2006 | | | 0,15 | |
| 5 | L | 285/ 270 | 3,28 | 469 | 1956 | 71 | 2165,5 | 0,21 | 0,42 |
| | R | | | | 2052 | | | 0,21 | |
| 6 | L | 285/ 270 | 2,67 | 800 | 1965 | 68 | 2059 | 0,09 | 0,20 |
| | R | | | | 2008 | | | 0,095 | |
| 7 | L | 285/ 270 | 2,66 | 770 | 1966 | 70 | 2135 | 0,09 | 0,21 |
| | R | | | | 1988 | | | 0,093 | |
| 8 | L | 285/ 270 | 2,65 | 795 | 1967 | 60 | 1830 | 0,107 | 0,20 |
| | R | | | | 1984 | | | 0,105 | |

Versuchsergebnisse Biegemomente:

**Tab. 11**

| Nr. | | Temperatureinstellung [°C] | spez. Durchsatz [kg*min/h] | abs. Durchsatz [kg/h] | Biegemom. [Nm] | Biegemom. Amplitude | Periodendauer Biegemoment [s] | Periodendauer Schnecke [s] |
|---|---|---|---|---|---|---|---|---|
| 1 | L | 285/270 | 2,74 | 460 | -20 / -160 | 70 | 0,35 | 0,36 |
| | R | | | | +40 / -60 | 50 | 0,36 | |
| 2 | L | 285/270 | 2,74 | 494 | -20 / -160 | 70 | 0,33 | 0,33 |
| | R | | | | +40 / -60 | 50 | 0,33 | |
| 3 | L | 285/270 | 2,68 | 475 | -20 / -160 | 70 | 0,33 | 0,34 |
| | R | | | | +40 / -60 | 50 | 0,33 | |
| 4 | L | 285/270 | 2,25 | 477 | -40 / -180 | 70 | 0,3 | 0,28 |
| | R | | | | +40 / -60 | 50 | 0,3 | |
| 5 | L | 285/270 | 3,28 | 469 | 0 / -150 | 75 | 0,42 | 0,42 |
| | R | | | | +50 / -60 | 55 | 0,42 | |
| 6 | L | 285/270 | 2,67 | 800 | +20 / -130 | 75 | 0,19 | 0,20 |
| | R | | | | +50 / -70 | 60 | 0,19 | |
| 7 | L | 285/270 | 2,66 | 770 | -20 / -160 | 70 | 0,18 | 0,21 |
| | R | | | | +40 / -70 | 55 | 0,19 | |
| 8 | L | 285/270 | 2,65 | 795 | -20 / -160 | 70 | 0,21 | 0,20 |
| | R | | | | +40 / -60 | 50 | 0,21 | |

Variation der spez. Durchsätze

**Tab. 12**

| Versuch s-Nr. | Schnecke | Temperatureinstellung [°C] | spez. Durchsatz [kg*min/h] | abs. Durchsatz [kg/h] | Drehzahl [U/min] | Drehmoment Mittelwert [Nm] | Biegemoment [Nm] | Drehmoment Änderung [%] |
|---|---|---|---|---|---|---|---|---|
| 4 | links | 285/270 | 2,25 | 477 | 212 | 1828 | -40 / -180 | - |
| | rechts | | | | | 2006 | +40 / -60 | - |
| 3 | links | 285/270 | 2,68 | 475 | 177 | 1785 | -20 / -160 | -2,35 |
| | rechts | | | | | 1807 | +40 / -60 | -9,92 |
| 5 | links | 285/270 | 3,28 | 469 | 143 | 1956 | 0 / -150 | 7,00 |
| | rechts | | | | | 2052 | +50 / -60 | 2,29 |

### Messungen bei verschiedenen Schneckenstreckungen:

**Tab. 13**

| Verfasser | Datum | Werkstoff | - | Anlage |
|---|---|---|---|---|
| P.Michels | 26.02.2015 | (PET) | Granulat | RZE 3.0 |

Versuchsplan:

**Tab. 14**

| Versuchspunkt | Durchsatz spez. [kg/h] | Durchsatz [kg*min/h] | Temperaturprofil [°C] | | | | | | | | | | Steckung |
|---|---|---|---|---|---|---|---|---|---|---|---|---|---|
| | | | 1.1 | 1.2 | 1.3 | 1.4 | 1.5 | 1.6 | 1.7 | 1.8 | 1.9 | 1.10 | |
| VP1 | 400 | 2,7 | 285 | 285 | 285 | 285 | 285 | 270 | 270 | 270 | 270 | 270 | (1) 7641001 |
| VP1 | 400 | 2,7 | 285 | 285 | 285 | 285 | 285 | 270 | 270 | 270 | 270 | 270 | (2) 7641005 |
| VP1 | 400 | 2,7 | 285 | 285 | 285 | 285 | 285 | 270 | 270 | 270 | 270 | 270 | (3) 7641006 |
| VP2 | 600 | 2,7 | 285 | 285 | 285 | 285 | 285 | 270 | 270 | 270 | 270 | 270 | (1) 7641001 |
| VP2 | 600 | 2,7 | 285 | 285 | 285 | 285 | 285 | 270 | 270 | 270 | 270 | 270 | (2) 7641005 |
| VP3 | 800 | 2,7 | 285 | 285 | 285 | 285 | 285 | 270 | 270 | 270 | 270 | 270 | (1) 7641001 |
| VP3 | 800 | 2,7 | 285 | 285 | 285 | 285 | 285 | 270 | 270 | 270 | 270 | 270 | (2) 7641005 |
| VP4 | 1000 | 2,7 | 285 | 285 | 285 | 285 | 285 | 270 | 270 | 270 | 270 | 270 | (1) 7641001 |

Versuchsergebnisse:

**Tab. 15**

| Versuchspunkt | Durchsatz | Steckung | Amplitude | Drehm. R | Biegem. R | Drehm. L | Biegem. L |
|---|---|---|---|---|---|---|---|
| | [kg/h] | | Offset | | | | |
| VP1 | 400 | (1) 7641001 | Amplitude | 51 | 24 | 61,7 | 51,3 |
| | | | Offset | 1736,7 | 5,8 | 1697,1 | 170,9 |
| VP1 | 400 | (2) 7641005 | Amplitude | 24,6 | 22,2 | 44,2 | 46 |
| | | | Offset | 1781,4 | 11,9 | 1733,5 | 82,3 |
| VP1 | 400 | (3) 7641006 | Amplitude | 40,75 | 23,89 | 36,44 | 50,69 |
| | | | Offset | 2095,9 | 17,15 | 2069,2 | 82,3 |
| VP2 | 600 | (1) 7641001 | Amplitude | 44,7 | 23,7 | 50,7 | 47,7 |
| | | | Offset | 1933 | 3,2 | 1911,8 | 148,1 |
| VP2 | 600 | (2) 7641005 | Amplitude | 30,6 | 16,4 | 34,9 | 35,5 |
| | | | Offset | 2074,5 | 11,8 | 2040,6 | 79,4 |
| VP3 | 800 | (1) 7641001 | Amplitude | 38,2 | 17,6 | 44,2 | 32,9 |
| | | | Offset | 2031,5 | 5,8 | 2046,1 | 125,26 |
| VP3 | 800 | (2) 7641005 | Amplitude | 24,5 | 17,4 | 28,6 | 28,4 |
| | | | Offset | 2124,9 13,3 | | 2151,3 | 144,2 |
| VP4 | 1000 | (1) 7641001 | Amplitude | 42,9 | 16,9 | 48 | 32,1 |
| | | | Offset | 2016,1 | 8,1 | 2059,8 | 115,2 |

### Protokoll zu den Verschleißmessungen:

**Tab. 16**

| Verfasser | Datum | Werkstoff | - | Anlage |
|---|---|---|---|---|
| P. Michels | 25.02.2015 | Polypropylen (PP) MFI3 | Granulat | RZE 3.0 |

Versuchsplan:

**Tab. 17**

| Nr. | abs. Durchsatz [kg/h] | spez. Durchsatz [kg*min/h] | Druck [bar] | Temperatur [°C] | | | | | | | | | | Drehzahl [1/min] |
|---|---|---|---|---|---|---|---|---|---|---|---|---|---|---|
| | | | | 1.1 | 1.2 | 1.3 | 1.4 | 1.5 | 1.6 | 1.7 | 1.8 | 1.9 | 1.10 | |
| VP1 | 400 | 2,7 | 60 | 200 | 220 | 240 | 240 | 240 | 240 | 240 | 240 | 240 | 240 | 148,1 |
| VP2 | 400 | 2,7 | 60 | 200 | 220 | 240 | 240 | 240 | 240 | 240 | 240 | 240 | 240 | 148,1 |
| VP3 | 400 | 2,3 | 60 | 200 | 220 | 240 | 240 | 240 | 240 | 240 | 240 | 240 | 240 | 173,9 |
| VP4 | 400 | 3,1 | 60 | 200 | 220 | 240 | 240 | 240 | 240 | 240 | 240 | 240 | 240 | 129,0 |
| VP5 | 400 | 2,7 | 40 | 200 | 220 | 240 | 240 | 240 | 240 | 240 | 240 | 240 | 240 | 148,1 |
| VP6 | 400 | 2,7 | 80 | 200 | 220 | 240 | 240 | 240 | 240 | 240 | 240 | | 240 | 148,1 |
| VP7 | 300 | 2,7 | 60 | 200 | 220 | 240 | 240 | 240 | 240 | 240 | 240 | 240 | 240 | 111,1 |
| VP8 | 500 | 2,7 | 60 | 200 | 220 | 240 | 240 | 240 | 240 | 240 | 240 | 240 | 240 | 185,2 |

Messergebnisse:

**Tab. 18**

| Nr. | | | Drehm. R [Nm] | Abweichung [%] | Biegem. R [Nm] | Abweichung. [%] | Drehm.L [Nm] | Abweichung [%] | Biegem.L [Nm] | Abweichung [%] | Abweichung zweischen den Versuchspunkten | | | |
|---|---|---|---|---|---|---|---|---|---|---|---|---|---|---|
| | | | | | | | | | | | D.R. [%] | B.R. [%] | D.L. [%] | B.L. [%] |
| 1 | Amplitude | Neu | 65.00 | - | 8,40 | - | 73,90 | - | 43,40 | - | - | - | - | - |
| | | Verschlissen | 73,80 | 13,54 | 60,90 | 625,00 | 58,70 | -20,57 | 28,40 | -34,56 | - | - | - | - |
| | Offset | Neu | 1828,00 | - | 14,20 | - | 1811,00 | - | 208,10 | - | - | - | - | - |
| | | Verschlissen | 1886,00 | 3,17 | 10.90 | -23,24 | 1880,00 | 3,81 | 88,90 | -57.28 | - | - | - | - |
| 2 | Amplitude | Neu | 68,60 | - | 9,60 | - | 80,00 | - | 45,60 | - | 5,54 | 14,29 | 8,25 | 5,07 |
| | | Verschlissen | 66.30 | -3,35 | 58,50 | 509,38 | 54,00 | -32,50 | 27,70 | -39,25 | -10,16 | -3,94 | -8.01 | -2,46 |
| | Offset | Neu | 1829,80 | - | 14,00 | - | 1805,10 | - | 205,90 | - | 0.10 | -1,41 | -0.33 | -1,06 |
| | | Verschlissen | 1871,60 | 2,28 | 11,20 | -20,00 | 1870,60 | 3,63 | 89,50 | -56.53 | -0.76 | 2,75 | -0,50 | 0,67 |
| 3 | Amplitude | Neu | 43,40 | - | 9,30 | - | 53,40 | - | 40,00 | - | -33,23 | 10,71 | -27,74 | -7,83 |
| | | Verschlissen | 55,00 | 26,73 | 58,10 | 524,73 | 45,90 | -14,04 | 30,60 | -23.50 | -25,47 | -4,60 | -21,81 | 7,75 |
| | Offset | Neu | 1645,70 | - | 13.00 | - | 1615,50 | - | 199,10 | - | -9.97 | -8,45 | -10,80 | -432 |
| | | Verschlissen | 1705,10 | 3,61 | 11,00 | -15.38 | 1692,60 | 4,77 | 87,80 | -55.90 | 9,59 | 0,92 | -9.97 | -1,24 |
| 4 | Amplitude | Neu | 72,40 | - | 9,50 | - | 69,00 | - | 51,90 | - | 11,38 | 13,10 | 6,63 | 19,59 |
| | | Verschlissen | 72,90 | 0,69 | 55,40 | 483,16 | 62,80 | -8,99 | 25,00 | -51.83 | -1,22 | -9,03 | 6,98 | -11,97 |
| | Offset | Neu | 2026,60 | - | 15,90 | - | 2003,70 | - | 196,10 | - | 10,86 | 11,97 | 10,64 | -5,77 |
| | | Verschlissen | -2069,40 | 2,11 | 11,90 | -25,16 | 2062,10 | 2,91 | 89,10 | -54.56 | 9,72 | 9,17 | 9,69 | 0,22 |
| | | | | | | | | | | | | | | |

| Nr. | | | Drehm. R [Nm] | Abweichung [%] | Biegem. R [Nm] | Abweichun [%] | Drehm. L [Nm] | Abweichun [%] | Biegem L [Nm] | Abweichun [%] | Abweichung zwischen den Verschspunkten | | | |
|---|---|---|---|---|---|---|---|---|---|---|---|---|---|---|
| | | | | | | | | | | | D.R [%] | B.R. [%] | D.L. [%] | B.L. [%] |
| 1 | Amplitude | Neu | 57,00 | - | 11.90 | - | 66,50 | - | 50,00 | - | -12,31 | 41.67 | -10,28 | 15,21 |
| | | Verschlissen | 61,90 | 8,60 | 56,80 | 377,31 | 54,80 | -17,35 | 27,50 | -45,00 | -16,12 | -6,73 | -6,64 | -3,17 |
| | Offset | Neu | 1805,0 | - | 12,60 | - | 1775,10 | - | 183,20 | - | -1,23 | -11,27 | -1,95 | -11,97 |
| | | Verschlissen | 1802,50 | -0,17 | 10,60 | -15,87 | 1804,30 | 1,64 | 81,40 | -55,57 | -4,43 | -2,75 | -4,03 | -8,44 |
| 2 | Amplitude | Neu | 55,70 | - | 10,90 | - | 63,90 | - | 45,60 | - | -14,31 | 29.76 | -13,53 | 5,07 |
| | | Verschlissen | 58,40 | 4,85 | 57,20 | 424,77 | 51,70 | -19,09 | 27,80 | -40.13 | -20.87 | -6,08 | -11,93 | -3,07 |
| | Offset | Neu | 1915,00 | - | 15,90 | - | 1882,80 | - | 194,20 | - | 4,76 | 11,97 | 3,95 | -6,68 |
| | | Verschlissen | 1922,00 | 0,37 | 11.50 | -27,67 | 1915,70 | 1,75 | 90,90 | -58,19 | 1,91 | 5,50 | 1,90 | 2,25 |
| 3 | Amplitude | Neu | 36,50 | - | 8.30 | - | 39,10 | - | 34,40 | - | -43,85 | -1,19 | -47,09 | -20,74 |
| | | Verschlissen | 61,40 | -68,22 | 56,30 | -578,81 | 54,30 | 38,87 | 29,90 | -13,08 | -16,80 | -7,55 | -7,50 | 5,28 |
| | Offset | Neu | 1764,60 | - | 14,00 | - | 1738,10 | - | 180,00 | - | -3,47 | -1,41 | -4,08 | -13,50 |
| | | Verschlissen | 175,40 | -0,46 | 10,00 | -28.57 | 1758,90 | 1,20 | 84,40 | -53.11 | -6,87 | -8,26 | -6,44 | -5,05 |
| 4 | Amplitude | Neu | - | - | | - | | - | - | - | - | - | - | - |
| | | Verschlissen | 50,10 | - | 47,88 | - | 46,08 | - | 23,50 | - | -32,11 | -21,38 | -21,50 | -17,25 |
| | Offset | Neu | - | - | | - | - | - | - | - | - | - | - | - |
| | | Verschlissen | 1930,10 | - | 11.69 | - | 1922,60 | - | 83,62 | - | 2,34 | 7,25 | 2,27 | -5,94 |

### Liste der verwendeten Bezugszeichen

- 1: Doppelschneckenextruder
- 2: Doppelschnecke
- 3: Messkupplungen
- 4: Getriebe
- 5: Sicherheitsrutschkupplung
- 6: Antriebsstrang
- 7: Schneckenwelle
- 8: Schneckenwelle
- 9: Dehnmessstreifen
- 10: Rotorantenne
- 11: Statorantenne

## Patentansprüche

1. Extruder
mit einem Zylinder und einer darin angeordneten Schnecke, insbesondere mit einem Doppelzylinder und einer darin angeordneten Doppelschnecke (2), sowie mit einem Antriebsstrang (6) für die Schnecke,
wobei der Antriebsstrang (6) zur Schnecke eine Kupplung aufweist und
wobei der Extruder, vor allem die Kupplung, einen Sensor zur Erfassung einer Momentenbelastung aus Dreh- und/oder Biegemoment und zur Erzeugung elektronischer Daten aus der erfassten Momentenbelastung aufweist,
wobei ein Controller vorgesehen ist, der in Wirkverbindung zu einem Antrieb für den Antriebsstrang (6) steht,
wobei der Sensor in Datenverbindung zum Controller steht,
wobei der Controller dazu eingerichtet ist, die Daten zur erfassten Momentenbelastung auszuwerten und bei Überschreiten eines im Controller eingestellten Grenzwerts eine Schutzaktion auszulösen,
wobei das Auswerten eine Biegemomentberechnung beinhaltet.

2. Extruder nach Anspruch 1, ***dadurch gekennzeichnet, dass*** ein gemitteltes Offset des Biegemoments errechnet wird.

3. Extruder nach Anspruch 1 oder 2, ***dadurch gekennzeichnet, dass*** eine Amplitude des Biegemoments errechnet wird.

4. Extruder,
*insbesondere* Extruder nach einem der Ansprüche 1 bis 3,
mit einem Zylinder und einer darin angeordneten Schnecke, insbesondere mit einem Doppelzylinder und einer darin angeordneten Doppelschnecke (2), sowie mit einem Antriebsstrang (6) für die Schnecke,
wobei der Antriebsstrang (6) zur Schnecke eine Kupplung aufweist und
wobei der Extruder, vor allem die Kupplung, einen Sensor zur Erfassung einer Momentenbelastung aus Dreh- und/oder Biegemoment und zur Erzeugung elektronischer Daten aus der erfassten Momentenbelastung aufweist,
wobei ein Controller vorgesehen ist, der in Wirkverbindung zu einem Antrieb für den Antriebsstrang (6) steht,
wobei der Sensor in Datenverbindung zum Controller steht,
wobei der Controller dazu eingerichtet ist, die Daten zur erfassten Momentenbelastung auszuwerten und bei Überschreiten eines im Controller eingestellten Grenzwerts eine Schutzaktion auszulösen,
wobei das Auswerten eine Frequenzberechnung beinhaltet, insbesondere eine Biegemomentfrequenzberechnung.

5. Extruder nach Anspruch 4, ***dadurch gekennzeichnet, dass*** die Frequenzberechnung eine Amplitudenerrechnung beinhaltet, insbesondere mehrere Amplitudenerrechnung zu verschiedenen Frequenzen.

6. Extruder nach einem der vorstehenden Ansprüche, ***dadurch gekennzeichnet, dass*** die Schutzaktion ein Abbremsen oder Anhalten des Antriebsstrangs und/oder ein Öffnen der Kupplung ist.

7. Extruder nach einem der vorstehenden Ansprüche, ***dadurch gekennzeichnet, dass*** der Extruder zwischen dem Antriebsstrang und der Schnecke eine erste Kupplung und eine zweite Kupplung aufweist, insbesondere eine Sicherheitsrutschkupplung (5) und eine Messkupplung (3), wobei bevorzugt die zwei Kupplungen beidseits eines Getriebes (4) angeordnet sind, insbesondere die Sicherheitsrutschkupplung (5) antriebstrangseitig des Getriebes und die Messkupplung (3) schneckenseitig des Getriebes.

8. Extruder nach einem der vorstehenden Ansprüche, ***dadurch gekennzeichnet, dass*** die Schutzaktion die Ausgabe einer Verschleißwarnung ist, wobei der Controller bevorzugt eine Quittierung anbietet, vor allem mit einer Autorisierung.

9. Extruder nach einem der vorstehenden Ansprüche, ***dadurch gekennzeichnet, dass*** mehrere unterschiedliche Grenzwerte vorgesehen sind, denen der Controller unterschiedliche Schutzaktionen zuzuordnen eingerichtet ist.

10. Extruder nach einem der vorstehenden Ansprüche, ***dadurch gekennzeichnet, dass*** der Sensor einen Dehnmessstreifen (9) aufweist.

11. Extruder nach einem der vorstehenden Ansprüche, ***dadurch gekennzeichnet, dass*** der Sensor eine Optik aufweist, insbesondere einen Laser und eine Lichtstrahlerfassung aufweist.

12. Extruder nach einem der vorstehenden Ansprüche, ***dadurch gekennzeichnet, dass*** ein magnetischer oder induktiver Sensor vorgesehen ist.

13. Extruder nach einem der vorstehenden Ansprüche, ***dadurch gekennzeichnet, dass*** der Controller in Datenverbindung zu einer extern aktualisierbaren Datenbank steht.

14. Extruder nach einem der vorstehenden Ansprüche, ***dadurch gekennzeichnet, dass*** der Controller eine Eingabeschnittstelle aufweist, um manuell eingegebene geometrische Mess- und/oder optische Werte zur Schnecke und/oder zum Zylinder aufzunehmen.

15. Extruder nach einem der vorstehenden Ansprüche, ***dadurch gekennzeichnet, dass*** der Controller einen Abgleichalgorithmus aufweist, um den Grenzwert oder Parameter zum Berechnen des Grenzwerts anhand der manuell eingegebenen Werte anzupassen.

16. Kunststoffformgebende Anlage, insbesondere Anlage zum Herstellen einer Folie, vor allem Blasfolienanlage oder Flachfolienanlage, oder eines Vlieses, mit einem Extruder nach einem der vorstehenden Ansprüche sowie mit einer Düseneinheit und einer Kühl- und Wickeleinheit; oder Compoundieranlage mit einem Extruder nach einem der vorstehenden Ansprüche.

17. Verfahren zum Betreiben einer Anlage nach Anspruch 16 mit einem Extruder nach einem der Ansprüche 1 bis 16, mit den Schritten
a. Erfassen eines Dreh- und/oder Biegemoments im Extruder über einen Sensor;
b. Übertragen von Daten zur erfassten Momentenbelastung an den Controller;
c. Auswerten der Daten durch den Controller, beinhaltend
i. eine Frequenzberechnung, insbesondere eine Biegemomentfrequenzberechnung, und/oder
ii. eine Biegemomentberechnung.

18. Verfahren nach Anspruch 17, ***dadurch gekennzeichnet, dass*** in der Berechnung Daten in Klassen gruppiert werden.

19. Verfahren nach Anspruch 18, ***dadurch gekennzeichnet, dass*** die Amplitude der Klasse überwacht wird.

20. Verfahren nach Anspruch 18 oder 19, ***dadurch gekennzeichnet, dass*** für zwei Klassen die Amplituden errechnet und überwacht werden.

21. Verfahren nach einem der Ansprüche 17 bis 20, ***dadurch gekennzeichnet, dass*** die Amplitude zumindest einer Klasse um 5 Hz bis 6 Hz errechnet wird.

22. Verfahren nach einem der Ansprüche 17 bis 21, ***dadurch gekennzeichnet, dass*** die Daten einer Frequenzbandbreite in eine Klasse gewertet werden.

23. Verfahren nach einem der Ansprüche 17 bis 22, ***dadurch gekennzeichnet, dass*** ein Offset des Biegemoments auf Reduzierung überwacht wird, um einen Verschleiß des Extruders zu erfassen.

24. Verfahren nach einem der Ansprüche 17 bis 23, ***dadurch gekennzeichnet, dass*** eine Amplitude des Biegemoments auf Reduzierung überwacht wird, um einen Verschleiß des Extruders zu erfassen.

25. Verfahren nach einem der Ansprüche 17 bis 24, ***dadurch gekennzeichnet, dass*** die Kupplung, insbesondere eine Sicherheitsrutschkupplung (5), bei fortschreitendem Verschleiß sensibler auslösend eingestellt wird.
